(19) Europäisches Patentamt / European Patent Office / Office européen des brevets

(11) **EP 3 869 231 B1**

(12) **EUROPEAN PATENT SPECIFICATION**

(45) Date of publication and mention
of the grant of the patent:
**28.02.2024  Bulletin 2024/09**

(51) International Patent Classification (IPC):
**G01S 17/10** $^{(2020.01)}$  **G01S 7/4865** $^{(2020.01)}$
**G01S 7/487** $^{(2006.01)}$  **G01S 17/14** $^{(2020.01)}$

(21) Application number: **18937474.7**

(22) Date of filing: **17.10.2018**

(52) Cooperative Patent Classification (CPC):
**G01S 17/14; G01S 7/4865; G01S 7/487;**
G01S 17/26

(86) International application number:
**PCT/JP2018/038655**

(87) International publication number:
**WO 2020/079775 (23.04.2020 Gazette 2020/17)**

(54) **RANGING DEVICE AND RANGING METHOD**

ENTFERNUNGSMESSVORRICHTUNG UND ENTFERNUNGSMESSVERFAHREN

DISPOSITIF DE TÉLÉMÉTRIE ET PROCÉDÉ DE TÉLÉMÉTRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.08.2021  Bulletin 2021/34**

(73) Proprietor: **NEC Corporation
108-8001 Tokyo (JP)**

(72) Inventor: **NOGUCHI Hidemi
Tokyo 108-8001 (JP)**

(74) Representative: **Vossius & Partner
Patentanwälte Rechtsanwälte mbB
Siebertstraße 3
81675 München (DE)**

(56) References cited:
**WO-A1-2013/094062    WO-A1-2015/087380
WO-A1-2017/134707    WO-A1-2017/134707
WO-A1-2018/116412    US-A1- 2011 116 072**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a distance-measurement apparatus and a distance-measurement method, and in particular to a distance-measurement apparatus and a distance-measurement method for measuring a distance by transmitting a pulse and receiving its reflection.

### Background Art

As a method for measuring a distance to a distance-measurement-target object, i.e., an object to which a distance is to be measured, there is a time-of-flight (Time of Flight; ToF) method. In the ToF method, a distance to a distance-measurement-target object, i.e., an object to which a distance is to be measured, is calculated by emitting a modulated optical pulse toward the distance-measurement-target object and receiving a reflection of the modulated optical pulse coming from the distance-measurement-target object. Note that the optical pulse may be periodically and repeatedly transmitted.

In relation to this technique, Patent Literature 1 discloses a method for providing distance information of a scene by using a time-of-flight sensor or a time-of-flight camera. The method disclosed in Patent Literature 1 includes: emitting a periodic optical signal toward a scene according to a modulation signal based on a clock timing having a reference frequency spread by periodic perturbation having a certain perturbation frequency and a certain perturbation period; receiving a reflection of the periodic optical signal from the scene; evaluating, for the received reflection of the periodic optical signal, time-of-flight information over a set of a plurality of measurement durations according to the modulation signal; and deriving distance information from the time-of-flight information for the received reflection. Note that each measurement duration included in the set is an integer multiple or a half integer multiple of the perturbation period, and the average of the reference frequencies is kept constant over the whole set of measurement durations.

### Citation List

### Patent Literature

Patent Literature 1: Japanese Unexamined Patent Application Publication No. 2014-522979
WO 2018/116412 A1 relates to a laser radar device.
WO 2017/134707 A1 relates to a distance measuring device in which an optical pulse is irradiated to an object to be measured.

## Summary of Invention

### Technical Problem

When a distance to a distance-measurement-target object is long or the transmission period of repeatedly transmitted transmission pulses is short, in some cases, the time from when an optical pulse is transmitted to when reflected light of the optical pulse is received becomes longer than the transmission period of transmission pulses. In such a case, there is a possibility that it is impossible to determine which transmission pulse the received light, i.e., the reflected light corresponds to, and hence impossible to determine at which timing the transmission pulse was transmitted. In other words, there is a possibility that it is impossible to associate the received reflected light with the transmission pulse. In such a case, there is a possibility that it is impossible to properly measure the distance. Note that, in the technique disclosed in Patent Literature 1, the reflected light is not associated with the emitted optical signal. Therefore, there is a possibility that it is impossible to properly measure a distance in the technique disclosed in Patent Literature 1.

The present disclosure has been made to solve the above-described problems and an object thereof is to provide a distance-measurement apparatus and a distance-measurement method capable of properly measuring a distance to a distance-measurement-target object irrespective of the distance thereto or the transmission period of transmission pulses. The invention is specified by the independent claims. Preferred embodiments are defined in the dependent claims.

### Solution to Problem

A distance-measurement apparatus according to the present disclosure includes the features of independent Claim 1.

Further, a distance-measurement method according to the present disclosure includes the features of independent Claim 6.

### Advantageous Effects of Invention

According to the present disclosure, it is possible to provide a distance-measurement apparatus and a distance-measurement method capable of properly measuring a distance to a distance-measurement-target object irrespective of the distance thereto or the transmission period of transmission pulses.

### Brief Description of Drawings

Fig. 1 schematically shows a distance-measurement apparatus according to an example embodiment of the present disclosure;

Fig. 2 schematically shows a distance-measurement method performed by a distance-measurement apparatus according to an example embodiment of the present disclosure;

Fig. 3 is a diagram for explaining an outline of a method for calculating a distance to a distance-measurement-target object by using pulses;

Fig. 4 shows a configuration of a distance-measurement apparatus according to a first example embodiment;

Fig. 5 is a diagram for explaining operations performed by an optical modulator according to the first example embodiment;

Fig. 6 is a flowchart showing a distance-measurement method performed by a distance-measurement apparatus according to the first example embodiment;

Fig. 7 is a timing chart showing a relation between transmission pulses and reflected pulses according to a comparative example;

Fig. 8 is a timing chart showing a relation between transmission pulses and reflected pulses according to a comparative example;

Fig. 9 is a timing chart showing a relation between transmission pulses and reflected pulses according to the first example embodiment;

Fig. 10 shows a configuration of a distance-measurement apparatus according to a second example embodiment not falling within the scope of the claimed subject-matter;

Fig. 11 shows a configuration of a distance-measurement apparatus according to a third example embodiment not falling within the scope of the claimed subject-matter;

Fig. 12 is a timing chart showing a relation between transmission pulses and reflected pulses according to the third example embodiment;

Fig. 13 shows a configuration of a distance-measurement apparatus according to a fourth example embodiment; and

Fig. 14 is a timing chart showing a relation between transmission pulses and reflected pulses according to the fourth example embodiment.

## Description of Embodiments

(Overview of Example Embodiment according to Present Disclosure)

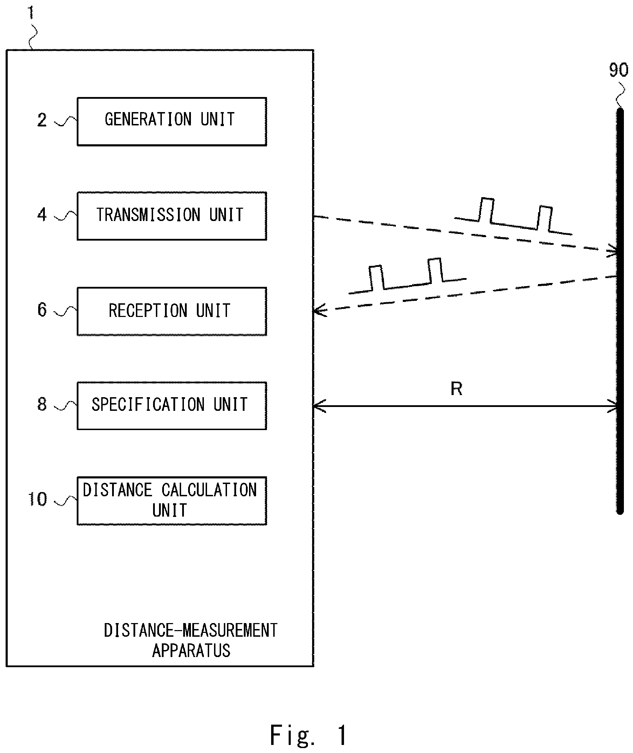

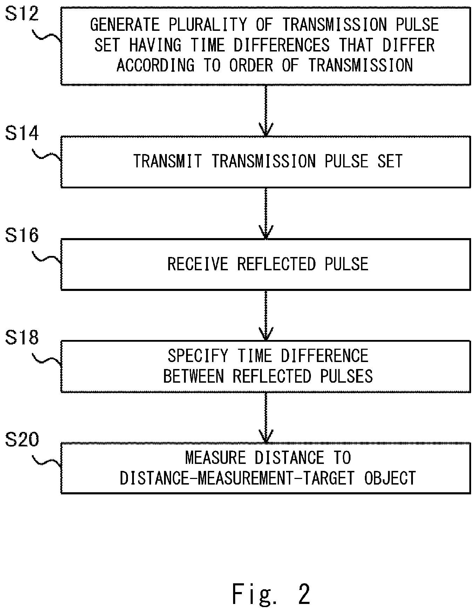

Prior to describing an example embodiment according to the present disclosure, an overview of the example embodiment according to the present disclosure will be described. Fig. 1 schematically shows a distance-measurement apparatus 1 according to an example embodiment in accordance with the present disclosure. Further, Fig. 2 shows an outline of a distance-measurement method performed by the distance-measurement apparatus 1 according to the example embodiment in accordance with the present disclosure.

The distance-measurement apparatus 1 includes a generation unit 2 that functions as generation means, a transmission unit 4 that functions as transmission means, a reception unit 6 that functions as reception means, a specification unit 8 that functions as specification means, and a distance calculation unit 10 that functions as distance calculation means. The generation unit 2 generates a transmission pulse set composed of a plurality of transmission pulses of which the strength of an optical signal changes in a pulse-like manner. Note that the generation unit 2 generates a transmission pulse set so that a time difference between times at which a plurality of transmission pulses are transmitted respectively differs according to the transmitting order of the transmission pulse set (step S12). Note that the generation unit 2 may generate a transmission pulse set so that a plurality of transmission pulses constituting the transmission pulse set have frequency offsets different from each other with respect to a reference frequency. Note that the frequency offset is a deviation (an offset) from a certain reference frequency.

The transmission unit 4 repeatedly transmits a transmission pulse set generated by the generation unit 2 (step S14). The reception unit 6 receives reflected pulses of the transmission pulses reflected on a distance-measurement-target object 90 (step S16). The specification unit 8 specifies a time difference between times at which a plurality of reflected pulses are received by the reception unit 6 (step S18). The distance calculation unit 10 calculates a distance R to the distance-measurement-target object 90 based on the receiving timings of the reflected pulses received by the reception unit 6 and the transmitting timings of the transmission pulses corresponding to the time difference specified for the reflected pulses (step S20).

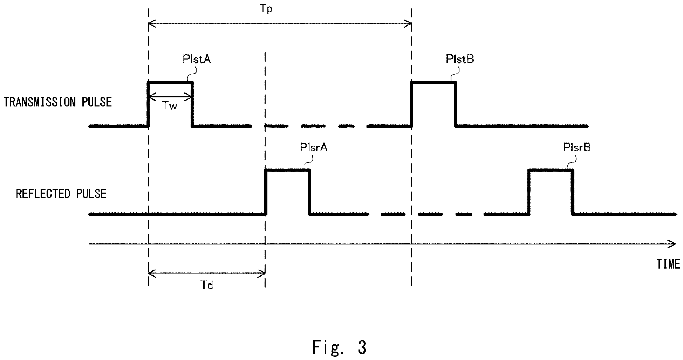

Fig. 3 is a diagram for explaining an outline of a method for calculating a distance to a distance-measurement-target object 90 by using pulses. Fig. 3 shows the principle of operations according to a ToF method. By the transmission unit 4, transmission pulses PlstA and PlstB are transmitted at a transmission period (a pulse period) Tp. Note that a pulse width, i.e., a width of each transmission pulse is represented by Tw. Then, when the transmission pulse PlstA is reflected on the distance-measurement-target object 90, a reflected pulse PlsrA, which is reflected light of the transmission pulse PlstA, is received by the reception unit 6. Further, when the transmission pulse PlstB is reflected on the distance-measurement-target object 90, a reflected pulse PlsrB, which is reflected light of the transmission pulse PlstB, is received by the reception unit 6.

Further, a time difference between a time at which the transmission pulse PlstA is transmitted and a time at which the reflected pulse PlsrA is received, i.e., the flight time of the light (the pulse) is represented by Td. Further, the speed of light is represented by c. In this case, the distance R to the distance-measurement-target object 90 is expressed by the below-shown Expression 1.

$$(\text{Expression 1}) \quad R = c \times Td/2$$

In this way, the distance R is calculated by the distance calculation unit 10.

In the example shown in Fig. 3, the two transmission pulses PlstA and PlstB are transmitted at the pulse period Tp, and the reflected pulses PlsrA and PlsrB, which are the reflected light of the transmission pulses PlstA and PlstB, respectively, are received. Note that when the distance to the distance-measurement-target object 90 is long, in some cases, the time difference Td becomes longer than the pulse period Tp. Further, even when the pulse period Tp is short, in some cases, the time difference Td becomes longer than the pulse period Tp. That is, depending on the distance to the distance-measurement-target object 90 or the pulse period, the relation Td > Tp holds. In such a case, the next transmission pulse PlstB is transmitted before the reflected pulse PlsrA is received. In this case, if it is impossible to determine whether the received reflected pulse PlsrA is the reflected light of the transmission pulse PlstA or the reflected light of the transmission pulse PlstB, there is a possibility that the distance cannot be properly measured. That is, if the distance is measured from the time difference between the transmitting time of the transmission pulse PlstB and the receiving time of the reflected pulse PlsrA, a distance shorter than the actual distance to the distance-measurement-target object 90 is calculated.

In contrast to this, the distance-measurement apparatus 1 according to this example embodiment is configured to generate a transmission pulse set composed of a plurality of transmission pulses in such a manner that a time difference between times at which the plurality of transmission pulses are transmitted respectively differs according to the transmitting order of the transmission pulse set. For example, the distance-measurement apparatus 1 according to this example embodiment generates a first transmission pulse set Ptset1 composed of a transmission pulse PlstA and a transmission pulse PlstA' accompanying the transmission pulse PlstA. Similarly, the distance-measurement apparatus 1 according to this example embodiment generates a second transmission pulse set Ptset2 composed of a transmission pulse PlstB and a transmission pulse PlstB' accompanying the transmission pulse PlstB. Further, the distance-measurement apparatus 1 is configured so that a time difference ΔT1 between the transmitting times of the transmission pulses PlstA and PlstA' is different from a time difference ΔT2 between the transmitting times of the transmission pulses PlstB and PlstB'. Further, the distance-measurement apparatus 1 according to this example embodiment is configured to specify a time difference between the receiving time of the received reflected pulse PlsrA and the receiving time of the reflected pulse PlsrA', which is the reflected pulse of the transmission pulse PlstA'. In this way, the distance-measurement apparatus 1 according to this example embodiment is configured to associate the reflected pulse PlsrA with the transmission pulse PlstA. Therefore, the distance-measurement apparatus 1 and the distance-measurement method according to this example embodiment can properly measure a distance to a distance-measurement-target object irrespective of the distance thereto or the transmission period of transmission pulses.

(First Example Embodiment)

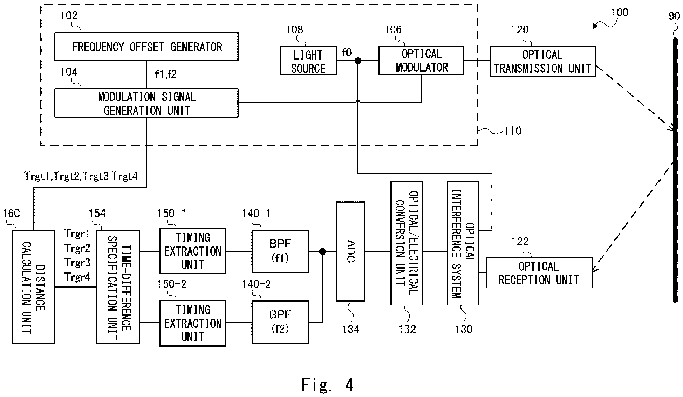

Next, a first example embodiment will be described. Fig. 4 shows a configuration of a distance-measurement apparatus 100 according to the first example embodiment. The distance-measurement apparatus 100 according to the first example embodiment includes, as a transmitting-side module, a frequency offset generator 102, a modulation signal generation unit 104, an optical modulator 106, a light source 108, and an optical transmission unit 120. The frequency offset generator 102, the modulation signal generation unit 104, the optical modulator 106, and the light source 108 constitute a pulse generation unit 110 that generates a transmission pulse set composed of a plurality of transmission pulses having a transmitting-time difference that differs according to the transmitting order. This pulse generation unit 110 corresponds to the generation unit 2 shown in Fig. 1. Further, the optical transmission unit 120 corresponds to the transmission unit 4 shown in Fig. 1.

Further, the distance-measurement apparatus 100 according to the first example embodiment includes, as a receiving-side module, an optical reception unit 122, an optical interference unit 130, an optical/electrical conversion unit 132, and an AD converter 134. The optical reception unit 122 corresponds to the reception unit 6 shown in Fig. 1. Further, the distance-measurement apparatus 100 according to the first example embodiment includes bandpass filters 140-1 and 140-2, timing extracting units 150-1 and 150-2, a time difference specification unit 154, and a distance calculation unit 160. The time difference specification unit 154 corresponds to the specification unit 8 shown in Fig. 1. Further, the distance calculation unit 160 corresponds to the distance calculation unit 10 shown in Fig. 1.

Further, in the first example embodiment, it is assumed that the number of transmission pulses constituting a transmission pulse set is two. That is, the transmission pulse set includes a transmission pulse Plst1 and a transmission pulse Plst2. Further, it is assumed that a time difference between times at which these two transmission pulses are transmitted differs according to the transmitting order of the transmission pulse set. Further, in the first example embodiment, it is assumed that the frequency offsets of two transmission pulses constituting a transmission pulse set are set to frequencies f1 and f2, respectively. Therefore, the bandpass filters 140-1 and 140-2 correspond to the frequency offsets f1 and f2, respectively. Similarly, the timing extracting units 150-1 and 150-2 correspond to the frequency offsets f1 and f2, respectively. Note that each of the above-described components can be implemented by some kind of a device or a circuit such as an arithmetic circuit or the like. The arithmetic circuit is, for example, an FPGA (Field-Programmable Gate Array) or the like. The same applies to the other example embodiments.

The frequency offset generator 102 outputs frequency offset information which is information indicating a plurality of frequency offsets, i.e., a plurality of offsets from a reference frequency f0 to the modulation signal generation unit 104. Note that the frequency offset information indicates the frequency offsets f1 and f2. Note that the frequency offset generator 102 may output frequency offset information indicating the frequency offset f1 to the modulation signal generation unit 104 at each pulse period Tp1 of the transmission pulse Plst1. Similarly, the frequency offset generator 102 may output frequency offset information indicating the frequency offset f2 to the modulation signal generation unit 104 at each pulse period Tp2 of the transmission pulse Plst2. However, the frequency offset generator 102 does not necessarily have to output the frequency offset information indicating the frequency offset f1 at each pulse period Tp1 at all times. Similarly, the frequency offset generator 102 does not necessarily have to output the frequency offset information indicating the frequency offset f2 at each pulse period Tp2 at all times.

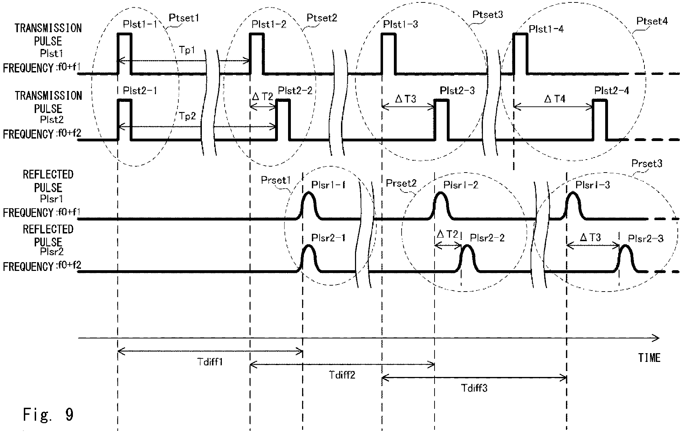

Note that the frequency offset generator 102 may output the frequency offset information indicating the frequency offset f1, and then, after a time difference $\Delta T$ has elapsed, output the frequency offset information indicating the frequency offset f2. Note that, in this example embodiment, this time difference $\Delta T$ differs according to the transmitting order of the transmission pulse set. For example, as shown in Fig. 9 (which will be described later), a time difference between frequency offset generation times (which correspond to the transmitting times) of transmission pulses Plst1 (Plst1-1) and Plst2 (Plst2-1), which constitute a first transmission pulse set Ptset1, is set to a time difference $\Delta T1$. Further, a time difference between frequency offset generation times (which correspond to the transmitting times) of transmission pulses Plst1 (Plst1-2) and Plst2 (Plst2-2), which constitute a second transmission pulse set Ptset2, is set to a time difference $\Delta T2$. In this case, the time difference $\Delta T2$ is different from the time difference $\Delta T1$. Note that the transmission pulses Plst2-1 and Plst2-2 correspond to the above-described accompanying transmission pulses PlstA' and PlstB', respectively.

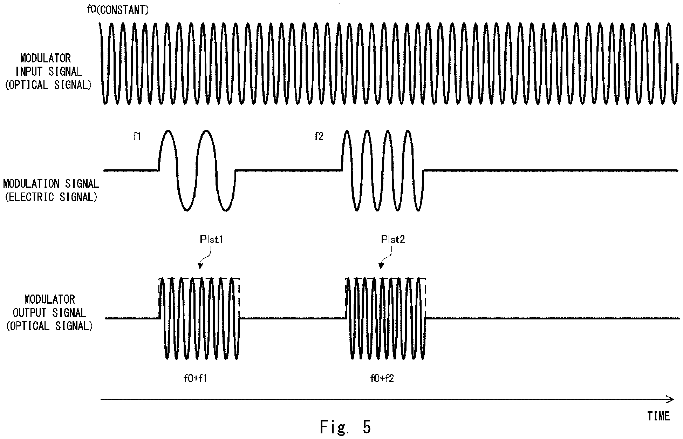

The modulation signal generation unit 104 generates a modulation signal, which is used to generate transmission pulses, according to the frequency offset information received from the frequency offset generator 102. Note that as shown in Fig. 5 (which will be described later), the modulation signal is an electric signal having a waveform corresponding to the frequency offsets f1 and f2. The modulation signal generation unit 104 outputs the generated modulation signal to the optical modulator 106.

Further, the modulation signal generation unit 104 outputs a measurement start trigger Trgt to the distance calculation unit 160 at a timing at which a transmission pulse corresponding to the frequency offset f1 is transmitted. Note that, in first example embodiment, the measurement start trigger Trgt indicates the transmitting timing of each of transmission pulses Plst1 (Plst1-1, Plst1-2, · · · ) included in each of successively-transmitted transmission pulse sets. Specifically, the modulation signal generation unit 104 outputs the measurement start trigger Trgt1 to the distance calculation unit 160 at a timing at which a modulation signal corresponding to the frequency offset f1 of the transmission pulse Plst1-1 of the first transmission pulse set Ptset1 is output. Further, the modulation signal generation unit 104 outputs a measurement start trigger Trgt2 to the distance calculation unit 160 at a timing at which a modulation signal corresponding to the frequency offset f1 of the transmission pulse Plst1-2 of the second transmission pulse set Ptset2 is output. Similarly and subsequently, the modulation signal generation unit 104 outputs a measurement start trigger Trgtk to the distance calculation unit 160 at a timing at which a modulation signal corresponding to the frequency offset f1 of a transmission pulse Plst1-k of a kth transmission pulse set Ptsetk is output.

The light source 108 generates an optical signal having a reference frequency f0 as shown in Fig. 5 (which will be described later). The optical signal is input to the optical modulator 106 and the optical interference unit 130. The optical modulator 106 generates a plurality of transmission pulses having frequency offsets f1 and f2 different from each other by using the modulation signal received from the modulation signal generation unit 104 and the optical signal (a modulator input signal) received from the light source 108. The optical modulator 106 outputs an optical signal including the generated transmission pulses to the optical transmission unit 120.

For example, the optical modulator 106 is an AO modulator (AcoustoOptic modulator). The optical modulator 106 modulates the optical signal (the modulator input signal) by using the modulation signal. In this way, the optical modulator 106 generates a plurality of transmission pulses having frequency offsets different from each other.

Fig. 5 is a diagram for explaining operations performed by the optical modulator 106 according to the first example embodiment. As shown in Fig. 5, the optical signal (the modulator input signal) input to the optical modulator 106 is an optical signal having a constant frequency f0. Further, the modulation signal has a pulse-like waveform having a frequency f1 and a pulse-like waveform having a frequency f2. Note that the amplitude of the modulation signal is 0V except for these pulse-like waveforms. Each of the waveforms is a sine wave having a width Tw.

Note that the optical modulator 106 modulates the optical signal according to the pulse-like waveform of the modulation signal, and outputs the modulated optical signal (a modulator output signal). This modulator output signal corresponds to the transmission pulse. When the optical modulator 106 receives a modulation signal having a pulse-like waveform having the frequency f1, it modulates the optical signal having the frequency f0 so as to f1-shift the optical signal, and outputs a pulse having a frequency f0+f1. This pulse corresponds to the transmission pulse Plst1. Further, when the optical modulator 106 receives a modulation signal having a pulse-like waveform having the frequency f2, it modulates the optical signal having the frequency f0 so as to f2-shift the optical signal, and outputs a pulse having a frequency f0+f2. This pulse corresponds to the transmission pulse Plst2. Therefore, the transmission pulse indicates a signal of which the optical strength changes in a pulse-like manner. In this way, the transmission pulses Plst1 and Plst2 have frequency offsets f1 and f2, respectively, different from each other. Note that broken lines in the modulator output signal indicates the optical strength (the envelope). In this way, the transmission pulse set Ptset composed of the transmission pulses Plst1 and Plst2 is generated. Further, in Fig. 5, the transmission pulses Plst1 and Plst2 can be arranged at an interval of the time difference ΔT. Note that as described above, this time difference ΔT differs according to the transmitting order of the transmission pulse set Ptset.

The optical transmission unit 120 transmits (emits) an optical signal including a plurality of transmission pulse sets (transmission pulses) to a distance-measurement-target object 90. The transmission pulses are reflected on the distance-measurement-target object 90 and travel toward the distance-measurement apparatus 100. The optical reception unit 122 receives an optical signal including a plurality of reflected pulses reflected on the distance-measurement-target object 90. Note that the frequencies of the plurality of received reflected pulses are frequencies f0+f1 and f0+f2. Further, the optical reception unit 122 repeatedly receives a reflected pulse set Prset which is a set of a reflected pulse Plsr1 having the frequency f0+f1 and a reflected pulse Plsr2 having the frequency f0+f2.

The optical interference unit 130 detects a frequency offset of the reflected pulse (the received light) by using an optical signal having the frequency f0 received from the light source 108 as reference light. Specifically, the optical interference unit 130 makes the reference light received from the light source 108 interfere with the received light and detects their beat frequency. In this way, the optical interference unit 130 detects the frequency offset of the reflected pulse. For example, the optical interference unit 130 may be a mixer using an optical coupler. Alternatively, the optical interference unit 130 may be, for example, a 90-degree hybrid circuit that makes the received light interfere with reference light, i.e., with reference light having two phases of 0 degrees and 90 degrees. The optical interference unit 130 outputs an optical signal having the frequencies f1 and f2 corresponding to the frequency offsets to the optical/electrical conversion unit 132.

The optical/electrical conversion unit 132 converts the optical signal received from the optical interference unit 130 into an electric signal. The optical/electrical conversion unit 132 may be, for example, an optical/electrical converter using a photodetector or a balanced optical receiver using two photodetectors. The AD converter 134 converts the electric signal, which is an analog signal converted by the optical/electrical conversion unit 132, into a digital signal. The electric signal indicating the frequencies f1 and f2, which has been obtained as the AD converter 134 has converted the analog signal into the digital signal, is output to the bandpass filters 140-1 and 140-2.

The bandpass filter 140 (Band Pass Filter; BPF) uses a frequency corresponding to the frequency offset as its center frequency. The center frequencies of the bandpass filters 140-1 and 140-2 are the frequencies f1 and f2, respectively. Therefore, the bandpass filters 140-1 and 140-2 let electric signals indicating the frequencies f1 and f2, respectively, pass therethrough. Therefore, the bandpass filter 140 has a function as separation means for separating the optical signal for each of the frequency offsets of the reflected pulses detected by the optical interference unit 130.

The timing extraction unit 150 functions as timing extraction means for extracting the receiving timing of the received reflected pulse. The timing extraction units 150-1 and 150-2 extract the receiving timings of reflected pulses Plsr1 and Plsr2 having the frequency offsets f1 and f2, respectively.

The time difference specification unit 154 specifies a time difference ΔT between times at which the reflected pulses having the frequency offsets f1 and f2 extracted by the timing extraction units 150-1 and 150-2 are received respectively. The time difference specification unit 154 specifies a transmission pulse set Ptset corresponding to the specified time difference ΔT. In this way, the reflected pulse set Prset is associated with the transmission pulse set Ptset. Then, the time difference specification unit 154 outputs a measurement stop trigger Trgr corresponding to the specified transmission pulse set Ptset to the distance calculation unit 160 at the receiving timing of the reflected pulse having the frequency offset f1.

For example, when the time difference ΔT1 is specified, the time difference specification unit 154 determines that the reflected pulse set Prset1 corresponding to the time difference ΔT1 corresponds to the transmission pulse set Ptset1. Then, the time difference specification unit 154 outputs the measurement stop trigger Trgr1 corresponding to the transmission pulse set Ptset1 to the distance calculation unit 160 at the receiving timing of the reflected pulse Plsr1-1 having the frequency offset f1. Similarly, when a time difference ΔT2 is specified, the time difference specification unit 154 outputs a measurement stop trigger Trgr2 corresponding to a transmission pulse set Ptset2 to the distance calculation unit 160 at the receiving timing of the reflected pulse Plsr1-2 having the frequency offset f1.

The distance calculation unit 160 calculates a distance R to the distance-measurement-target object 90, by using the Expression 1, from the time difference (the flight time) between the output timing of the measurement start trigger Trgt (a first trigger signal) and the output timing of the measurement stop trigger Trgr (a second trigger signal). The distance calculation unit 160 calculates the distance R from the time difference between the output timing of the measurement start trigger Trgt1 corresponding to the first transmission pulse set Ptset1 and the output timing of the measurement stop trigger Trgr1 corresponding to the first reflected pulse set Prset1. The distance calculation unit 160 calculates the distance R from the time difference between the output timing of the measurement start trigger Trgt2 corresponding to the second transmission pulse set Ptset2 and the output timing of the measurement stop trigger Trgr2 corresponding to the second reflected pulse set Prset2. Similarly and subsequently, the distance calculation unit 160 calculates the distance R from a time difference between the output timing of a measurement start trigger Trgtk corresponding to a kth transmission pulse set and the output timing of a measurement stop trigger Trgrk corresponding to a kth reflected pulse set.

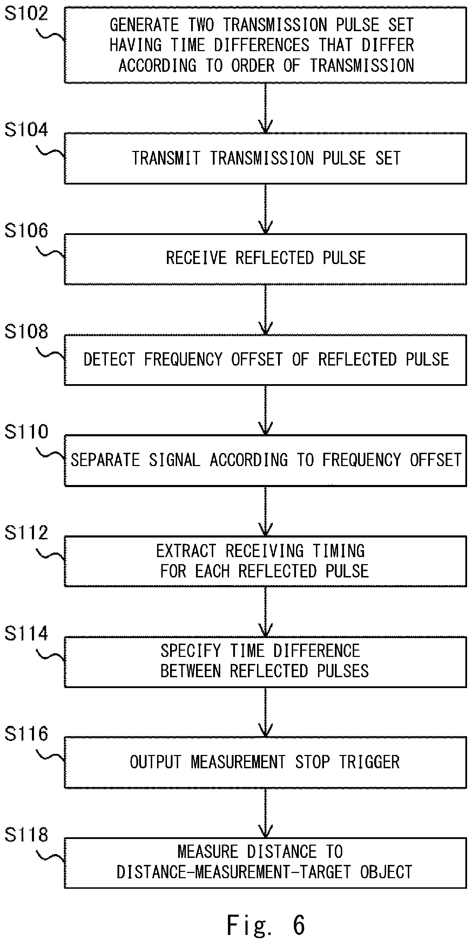

Fig. 6 is a flowchart showing a distance-measurement method performed by the distance-measurement apparatus 100 according to the first example embodiment. As described above, the pulse generation unit 110 generates a transmission pulse set, which is a set of two transmission pulses having a time difference ΔT that differs according to the transmitting order (step S102). The optical transmission unit 120 transmits (emits) an optical signal including the transmission pulse set generated through the process in the step S102 to a distance-measurement-target object 90 (step S104). Specifically, the optical modulator 106 of the pulse generation unit 110 modulates the optical signal (the modulator input signal) by using a modulation signal generated by the modulation signal generation unit 104. In this way, the optical modulator 106 generates a transmission pulse set composed of two transmission pulses having frequency offsets different from each other. Note that, at the timing of the step S104, a measurement start trigger Trgt corresponding to one of the two transmission pulses (the transmission pulse Plst1) may be output to the distance calculation unit 160.

The optical reception unit 122 receives an optical signal including reflected pulses (step S106). As described above, the optical interference unit 130 detects the frequency offset of each reflected pulse by using the reference light (step S108). The bandpass filter 140 (the separation means) separates the optical signal for each of the frequency offsets as described above (step S110). In this way, the optical signal is separated for each of reflected pulses.

The timing extraction unit 150 extracts a receiving timing for each separated reflected pulse as described above (step S112). The time difference specification unit 154 specifies a time difference between times at which the reflected pulses constituting the reflected pulse set Prset are received as described above (step S114). The time difference specification unit 154 outputs a measurement stop trigger Trgr corresponding to the specified time difference (step S116). The distance calculation unit 160 calculates a distance R to the distance-measurement-target object 90 by using the measurement start trigger Trgt and the measurement stop trigger Trgr as described above (step S118).

(Comparison with Comparative Example)

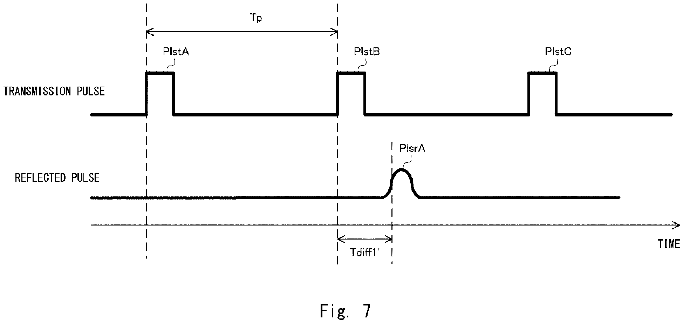

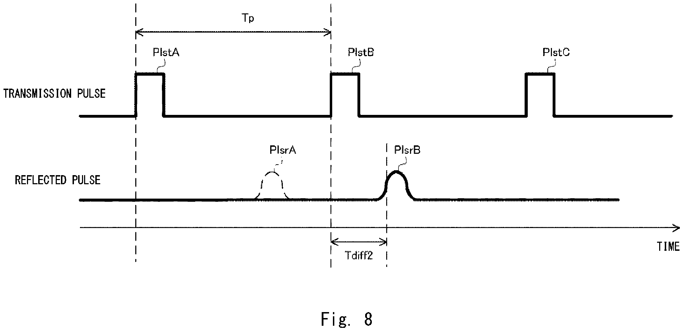

Next, the first example embodiment and a comparative example will be described by using timing charts. Figs. 7 and 8 are timing charts showing a relation between transmission pulses and reflected pulses according to the comparative example. In the example shown in Figs. 7 and 8, it is assumed that transmission pulses PlstA, PlstB and PlstC are transmitted at a pulse period Tp. Further, it is assumed that the transmission pulses PlstA, PlstB and PlstC have the same frequency. Further, in the example shown in Fig. 7, it is assumed that the flight time until a transmission pulse is reflected on the distance-measurement-target object 90 and returned is longer than the pulse period Tp.

Firstly, the transmission pulse PlstA is transmitted. After that and after the transmission pulse PlstB is transmitted, a reflected pulse PlsrA, which is the transmission pulse PlstA that has been reflected on the distance-measurement-target object 90 and returned, is received. At this point, in the comparative example shown in Fig. 7, there is a possibility that a distance is measured by using a time difference Tdiff1' between the transmitting timing of the transmission pulse PlstB and the receiving timing of the reflected pulse PlsrA. When a distance is measured by using the time difference Tdiff1' as described above, the distance is incorrectly calculated.

In contrast, in the example shown in Fig. 8, it is assumed that the flight time until a transmission pulse is reflected on the distance-measurement-target object 90 and returned is shorter than the pulse period Tp. Further, it is assumed that the transmission pulse PlstA is not reflected, so that no reflected pulse PlsrA of the transmission pulse PlstA is received. Further, it is assumed that the transmission pulse PlstB is reflected on the distance-measurement-target object and its reflected pulse PlsrB is received. In this case, the distance is measured by using a time difference Tdiff2 between the transmitting timing of the transmission pulse PlstB and the receiving timing of the reflected pulse PlsrB. Although this distance measurement process is correct, it cannot be distinguished from the process shown in Fig. 7.

In order to cope with the problem shown in Figs. 7 and 8, it is conceivable to increase the pulse period when it is presumed that the distance to the distance-measurement-target object is long. In this way, it is possible to prevent the incorrect measurement of a distance like the one shown in Fig. 7. However, if the pulse period is increased, the length of time from a time at which a distance is measured to a time at which the next distance is measured is increased, so that the speed of the distance measurement may decrease. Therefore, since distances cannot be measured at a desired speed, the distance measurement cannot be performed properly. In contrast to this, the distance-measurement apparatus 100 according to the first example embodiment can measure distances without increasing the pulse period.

Fig. 9 is a timing chart showing a relation between transmission pulses and reflected pulses according to the first example embodiment. In the example shown in Fig. 9, it is assumed that a transmission pulse Plst1 is transmitted at a pulse period Tp1, and a transmission pulse Plst2 is transmitted at a pulse period Tp2 (Tp2 > Tp1). Further, in the example shown in Fig. 9, it is assumed that the flight time until a transmission pulse is reflected on the distance-measurement-target object 90 and returned is longer than the pulse periods Tp1 and Tp2. Further, the frequency of the transmission pulse Plst1 is a frequency f0+f1, and the frequency of the transmission pulse Plst2 is a frequency f0+f2. That is, the transmission pulse Plst1 has a frequency offset f1, and the transmission pulse Plst2 has a frequency offset f2. Note that, in Fig. 9, unless otherwise specified, the chronological relation between the time for the transmission pulse and the time for the reflected pulse should not be interpreted as a restrictive purpose. For example, although the transmitting time of a transmission pulse Plst2-3 seems to coincide with the receiving time of a reflected pulse Plsr1-2 in Fig. 9, they do not have to coincide with each other. The same applies to the other timing charts.

Firstly, a first transmission pulse set Ptset1 is transmitted. The transmission pulse set Ptset1 is composed of a transmission pulse Plst1-1 having a frequency offset f1 and a transmission pulse Plst2-1 having a frequency offset f2. It is assumed that a time difference ΔT1 between the transmitting times of the transmission pulses Plst1-1 and Plst2-1 is zero, i.e., the transmission pulses Plst1-1 and Plst2-1 are transmitted at the same timing. Further, a measurement start trigger Trgt1 is output to the distance calculation unit 160 at the transmitting timing of the transmission pulse Plst1-1.

Next, a second transmission pulse set Ptset2 is transmitted. The transmission pulse set Ptset2 is composed of a transmission pulse Plst1-2 having the frequency offset f1 and a transmission pulse Plst2-2 having the frequency offset f2. A time difference ΔT2 between the transmitting times of the transmission pulse Plst1-2 and Plst2-2 is different from the time difference ΔT1 (ΔT1 = 0) in the transmission pulse set Ptset1. Further, a measurement start trigger Trgt2 is output to the distance calculation unit 160 at the transmitting timing of the transmission pulse Plst1-2.

Next, a third transmission pulse set Ptset3 is transmitted. The transmission pulse set Ptset3 is composed of a transmission pulse Plst1-3 having the frequency offset f1 and a transmission pulse Plst2-3 having the frequency offset f2. A time difference ΔT3 between the transmitting times of the transmission pulse Plst1-3 and Plst2-3 is different from both the time difference ΔT1 in the transmission pulse set Ptset1 and the time difference ΔT2 in the transmission pulse set Ptset2. Further, a measurement start trigger Trgt3 is output to the distance calculation unit 160 at the transmitting timing of the transmission pulse Plst1-3.

Next, a fourth transmission pulse set Ptset4 is transmitted. The transmission pulse set Ptset4 is composed of a transmission pulse Plst1-4 having the frequency offset f1 and a transmission pulse Plst2-4 having the frequency offset f2. A time difference ΔT4 between the transmitting times of the transmission pulse Plst1-4 and Plst2-4 is different from all of the time differences ΔT1, ΔT2 and ΔT3. Further, a measurement start trigger Trgt4 is output to the distance calculation unit 160 at the transmitting timing of the transmission pulse Plstl-4.

Note that the time differences ΔT1, ΔT2, ΔT3 and ΔT4 between the transmitting times are much smaller than the transmission periods of the transmission pulses Plst1 and Plst2. Further, the time differences ΔT1, ΔT2, ΔT3 and ΔT4 need to be distinguishable from one another by the time difference specification unit 154. Therefore, the time differences ΔT1, ΔT2, ΔT3 and ΔT4 are sufficiently long so that they can be distinguished from each other, but are preferably as short as possible. By shortening the time differences ΔT1, ΔT2, ΔT3 and ΔT4 as much as possible, it is possible to prevent a transmission pulse set Ptset from being overlapped by the next transmission pulse set Ptset. The same applies to the other example embodiments.

Further, after transmitting the transmission pulse set Ptset4, the distance-measurement apparatus 100 may transmit a transmission pulse set Ptset5 composed of transmission pulses Plst1 and Plst2 that are transmitted with a time difference ΔT5 which differs from any of the aforementioned time differences. Alternatively, after transmitting the transmission pulse set Ptset4, the distance-measurement apparatus 100 may transmit the transmission pulse set Ptset1 again. Note that the transmission pulse set Ptset1 may be transmitted again after a flight time for a round trip of an optical signal is expected to have elapsed. The same applies to the other example embodiments.

Meanwhile, after the transmission pulse Plst1-2 is transmitted, a reflected pulse Plsr1-1 having the frequency offset f1 is received. Further, at substantially the same timing, a reflected pulse Plsr2-1 having the frequency offset f2 is received. The reflected pulse Plsr1-1 is separated by the bandpass filter 140-1. Further, the receiving timing of the reflected pulse Plsr1-1 is extracted by the timing extraction unit 150-1. Similarly, the reflected pulse Plsr2-1 is separated by the bandpass filter 140-2. Further, the receiving timing of the reflected pulse Plsr2-1 is extracted by the timing extraction unit 150-2. Note that the transmitted optical signal is attenuated due to the reflection on the distance-measurement-target object 90 and through the flight process of the optical signal. As a result, the waveforms of the envelops of the reflected pulses Plsr1 and Plsr2 are blunted as compared to the waveforms of the envelops of the transmission pulses Plst1 and Plst2. Therefore, the timing extraction unit 150 extracts the receiving timing at a timing at which the optical strengths of the reflected pulses Plsr1 and Plsr2 exceed a predetermined threshold.

The time difference specification unit 154 specifies a time difference between the receiving timings of the reflected pulses Plsr1-1 and Plsr2-1. In this case, the time difference specification unit 154 determines that the time difference between the receiving timings of the reflected pulses Plsr1-1 and Plsr2-1 is the time difference ∆T1, i.e., is zero. Therefore, the time difference specification unit 154 determines that the reflected pulse set Prset1, which is a set of the reflected pulses Plsr1-1 and Plsr2-1, corresponds to the first transmission pulse set Ptset1 related to the time difference ∆T1. Therefore, the time difference specification unit 154 outputs a measurement stop trigger Trgr1 corresponding to the measurement start trigger Trgt1 to the distance calculation unit 160 at the receiving timing of the reflected pulse Plsr1-1 having the frequency offset f1. At this point, the distance calculation unit 160 calculates a distance to the distance-measurement-target object 90 from a time difference Tdiff1 between the measurement start trigger Trgt1 and the measurement stop trigger Trgr1.

Further, after the transmission pulse Plst1-3 is transmitted, a reflected pulse Plsr1-2 having the frequency offset f1 is received. Further, at substantially the same timing, a reflected pulse Plsr2-2 having the frequency offset f2 is received. The reflected pulse Plsr1-2 is separated by the bandpass filter 140-1. Further, the receiving timing of the reflected pulse Plsr1-2 is extracted by the timing extraction unit 150-1. Similarly, the reflected pulse Plsr2-2 is separated by the bandpass filter 140-2. Further, the receiving timing of the reflected pulse Plsr2-2 is extracted by the timing extraction unit 150-2.

The time difference specification unit 154 specifies a time difference between the receiving timings of the reflected pulses Plsr1-2 and Plsr2-2. In this case, the time difference specification unit 154 determines that the time difference between the receiving timings of the reflected pulses Plsr1-2 and Plsr2-2 is the time difference ∆T2. Therefore, the time difference specification unit 154 determines that the reflected pulse set Prset2, which is a set of the reflected pulses Plsr1-2 and Plsr2-2, corresponds to the second transmission pulse set Ptset2 related to the time difference ∆T2. Therefore, the time difference specification unit 154 outputs a measurement stop trigger Trgr2 corresponding to the measurement start trigger Trgt2 to the distance calculation unit 160 at the receiving timing of the reflected pulse Plsr1-2 having the frequency offset f1. At this point, the distance calculation unit 160 calculates a distance to the distance-measurement-target object 90 from a time difference Tdiff2 between the measurement start trigger Trgt2 and the measurement stop trigger Trgr2.

Further, after the transmission pulse Plst1-4 is transmitted, a reflected pulse Plsr1-3 having the frequency offset f1 is received. Further, at substantially the same timing, a reflected pulse Plsr2-3 having the frequency offset f2 is received. The reflected pulse Plsr1-3 is separated by the bandpass filter 140-1. Further, the receiving timing of the reflected pulse Plsr1-3 is extracted by the timing extraction unit 150-1. Similarly, the reflected pulse Plsr2-3 is separated by the bandpass filter 140-2. Further, the receiving timing of the reflected pulse Plsr2-3 is extracted by the timing extraction unit 150-2.

The time difference specification unit 154 specifies a time difference between the receiving timings of the reflected pulses Plsr1-3 and Plsr2-3. In this case, the time difference specification unit 154 determines that the time difference between the receiving timings of the reflected pulses Plsr1-3 and Plsr2-3 is the time difference ∆T3. Therefore, the time difference specification unit 154 determines that the reflected pulse set Prset3, which is a set of the reflected pulses Plsr1-3 and Plsr2-3, corresponds to the third transmission pulse set Ptset3 related to the time difference ∆T3. Therefore, the time difference specification unit 154 outputs a measurement stop trigger Trgr3 corresponding to the measurement start trigger Trgt3 to the distance calculation unit 160 at the receiving timing of the reflected pulse Plsr1-3 having the frequency offset f1. At this point, the distance calculation unit 160 calculates a distance to the distance-measurement-target object 90 from a time difference Tdiff3 between the measurement start trigger Trgt3 and the measurement stop trigger Trgr3.

As described above, the distance-measurement apparatus 100 according to the first example embodiment can specify the ordinal position of the transmission pulse (the transmission pulse set) that corresponds to the received reflected pulse (the reflected pulse set) in the transmitting sequence by specifying the time difference between times at which two reflected pulses constituting the reflected pulse set are received. In this way, even when the distance to the distance-measurement-target object 90 is long, it is unnecessary to increase the period at which a distance is measured. Further, even when transmission pulses are successively applied to the distance-measurement-target object 90 at a considerably short period, the reflected pulses can be distinguished from one another in the receiving-side module, so that it is possible to properly measure the distance to the distance-measurement-target object 90. Further, since it is possible to successively apply transmission pulses to the distance-measurement-target object 90 at a considerably short period, it is possible to increase the number of times of distance measurements in a unit time.

Further, it is possible to improve the accuracy of the distance measurement by repeatedly applying a transmission pulse to the same distance-measurement-target object 90 and thereby repeatedly measuring the distance thereto, and averaging the results of the measurements. That is, the distance to the same distance-measurement-target object 90 is measured four times by applying transmission pulses Plst1-1 to Plst1-4 to the distance-measurement-target object 90 and using reflected pulses Plsr1-1 to Plsr1-4 thereof. Then, the accuracy of the distance measurement is improved by averaging the results of the four distance measurements. Therefore, the distance-measurement apparatus 100 according to the first example embodiment can improve the accuracy of the above-described averaging process in a short time by successively applying transmission pulses to the same distance-measurement-target object 90 at a considerably short period. As described above, the distance-measurement apparatus 100 according to the first example embodiment can properly calculate a distance to a distance-measurement-target object 90, on which transmission pulses are reflected, even when the flight time of the optical signal is longer than the pulse period.

Further, the distance-measurement apparatus 100 according to the first example embodiment is configured to transmit a transmission pulse set composed of two transmission pulses, i.e., two transmission pulses having frequency offsets different from each other with respect to the reference frequency. In this way, it is possible to, by detecting the frequency offsets by the receiving-side module, distinguish the two reflected pulses corresponding to the two transmission pulses. As a result, it is possible to easily specify a time difference between times at which these two reflected pulses are received, so that it is possible to easily specify transmission pulses (a transmission pulse set) corresponding to the two reflected pulses (a reflected pulse set).

Note that as a method for associating a transmission pulse with its reflected pulse, it is conceivable to, instead of using a transmission pulse set composed of two transmission pulses, change the frequency offset of a transmission pulse according to the ordinal position in the transmitting sequence. In this way, it is possible to, by detecting the frequency offset of a reflected pulse in the receiving system (i.e., the receiving-side module), associate the reflected pulse with the transmission pulse. Note that, in this method, it is necessary to change the frequency every time a transmission pulse is transmitted, so that it is necessary to widen the frequency band required for the transmission/reception performed by the distance-measurement apparatus 100. In contrast, the distance-measurement apparatus 100 according to the first example embodiment is configured to, by using a time difference between times at which two transmission pulses constituting a transmission pulse set are transmitted, associate reflected pulses (a reflected pulse set) with the transmission pulses (the transmission pulse set). In this way, it is unnecessary to change the frequency every time a transmission pulse is transmitted, so that the frequency band required for the transmission/reception performed by the distance-measurement apparatus 100 may be narrowed. For example, in the example shown in Fig. 9, in the case where the frequency is changed every time a transmission pulse is transmitted, four frequency offsets are required. In contrast, in the first example embodiment, only two frequency offsets are required. Further, since it is unnecessary to change the frequency every time a transmission pulse is transmitted, it is possible to simplify the configuration of the transmitting-side module and the receiving-side module as compared to the case where it is necessary to change the frequency every time a transmission pulse is transmitted.

Further, the distance-measurement apparatus 100 according to the first example embodiment is configured to separate a received optical signal for each of the frequency offsets of the reflected pulses by using the bandpass filter 140 (the separation means). Since the separation of an optical signal using the bandpass filter 140 can be performed by hardware, it can be performed at a high speed as compared to the processing performed by software. Further, by separating a received signal for each of the frequency offsets of the reflected pulses, it is possible to easily extract the receiving timing of each reflected pulse.

Note that the distance-measurement apparatus 100 according to the first example embodiment transmits two transmission pulses for which a different transmitting time difference is set according to the transmitting order in order to associate the reflected pulses, i.e., the reflected light of the transmission pulses reflected on the distance-measurement-target object 90 with the transmission pulses. That is, it can be said that the distance-measurement apparatus 100 according to the first example embodiment marks a transmission pulse in order to distinguish the reflected pulse corresponding to the transmission pulse from those corresponding to other transmission pulses. Note that as a method for marking a transmission pulse, it is conceivable to change the amplitude of each transmission pulse. However, depending on the distance to the distance-measurement-target object 90 or the like, the degree of the attenuation of the signal (the pulse) may change. Therefore, it is difficult to distinguish reflected pulses from one another by using the amplitude thereof.

(Second Example Embodiment)

Next, a second example embodiment not falling within the scope of the claimed subject-matter will be described. The second example embodiment is different from the first example embodiment because the second example embodiment includes a plurality of light sources. Note that components in the second example embodiment that are substantially the same as those in the first example embodiment are denoted by the same reference numerals (or the same symbols). Further, in the following descriptions, descriptions of components that are substantially the same as those in the first example embodiment will be omitted as appropriate.

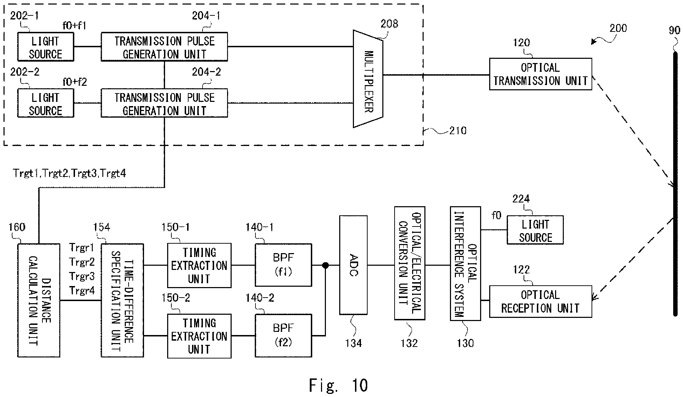

Fig. 10 shows a configuration of a distance-measurement apparatus 200 according to the second example embodiment. The distance-measurement apparatus 200 according to the second example embodiment includes, as a transmitting-side module, light sources 202-1 and 202-2, transmission pulse generation unit 204-1 and 204-2, a multiplexer 208, and an optical transmission unit 120. The light sources 202, the transmission pulse generation units 204, and the multiplexer 208 constitute a pulse generation unit 210 that generates a transmission pulse set composed of a plurality of transmission pulses that have a different transmitting-time difference according to the transmitting order. This pulse generation unit 210 corresponds to the generation unit 2 shown in Fig. 1.

Further, the distance-measurement apparatus 200 according to the second example embodiment includes, as a receiving-side module, an optical reception unit 122, a light source 224, an optical interference unit 130, an optical/electrical conversion unit 132, and an AD converter 134. Further, similarly to the first example embodiment, the distance-measurement apparatus 200 according to the second example embodiment includes bandpass filters 140-1 and 140-2, timing extraction units 150-1 and 150-2, a time difference specification unit 154, and a distance calculation unit 160. That is, the receiving-side module of the distance-measurement apparatus 200 is substantially the same as that of the first example embodiment except that it includes the light source 224.

The light source 202-1 generates an optical signal having a frequency f0+f1, and outputs the generated optical signal to the transmission pulse generation unit 204-1. The light source 202-2 generates an optical signal having a frequency f0+f2, and outputs the generated optical signal to the transmission pulse generation unit 204-2. Each of the transmission pulse generation units 204 has substantially the same function as those of the modulation signal generation unit 104 and the optical modulator 106 shown in Fig. 4. The transmission pulse generation unit 204-1 generates a transmission pulse Plst1 like the one shown in Fig. 5 by modulating the optical signal having the frequency f0+f1. The transmission pulse generation unit 204-2 generates a transmission pulse Plst2 like the one shown in Fig. 5 by modulating the optical signal having the frequency f0+f2. Further, the transmission pulse generation unit 204-2 may generate the transmission pulse Plst2 after a time difference ΔT has elapsed after the transmission pulse generation unit 204-1 generates the transmission pulse Plst1. Note that in the second example embodiment, similarly to the first example embodiment, this time difference ΔT differs according to the transmitting order of the transmission pulse set.

The multiplexer 208 combines (i.e., multiplexes) the transmission pulses Plst1 and Plst2. In this way, the multiplexer 208 generates an optical signal of a transmission pulse set Ptset including transmission pulses Plst1 and Plst1 that are arranged at an interval of the time difference ΔT on the time axis as shown in Fig. 5. The optical transmission unit 120 transmits (emits) this optical signal to a distance-measurement-target object 90.

Further, the transmission pulse generation unit 204-1 outputs a measurement start trigger Trgt to the distance calculation unit 160 at a timing at which a transmission pulse having the frequency offset f1 is output. That is, the transmission pulse generation unit 204-1 outputs the measurement start trigger Trgt1 at a timing at which the transmission pulse Plst1-1 in the first transmission pulse set is generated. Further, the transmission pulse generation unit 204-1 outputs a measurement start trigger Trgt2 at a timing at which the transmission pulse Plst1-2 in the second transmission pulse set is generated. Similarly, the transmission pulse generation unit 204-1 outputs a measurement start trigger Trgtk at a timing at which a transmission pulse Plst1-k in a kth transmission pulse set is generated.

The light source 224 emits an optical signal having a reference frequency f0 as reference light. When the optical reception unit 122 receives a reflected pulse (reflected light), the optical interference unit 130 detects a frequency offset of the reflected pulse (the received light) by using the reference light having the frequency f0 received from the light source 224 according to the above-described method. Note that the operations performed by the optical/electrical conversion unit 132, the AD converter 134, the bandpass filters 140, the timing extraction units 150, the time difference specification unit 154, and the distance calculation unit 160 are substantially the same as those performed in the first example embodiment, and therefore descriptions thereof will be omitted.

The distance-measurement apparatus 200 according to the second example embodiment includes the light sources 202-1 and 202-2 each of which emits an optical signal in which a frequency offset is set in advance. Even by the above-described configuration, similarly to the first example embodiment, it is possible to properly measure a distance to a distance-measurement-target object 90 irrespective of the distance thereto or the transmission period of the transmission pulse. It should be noted that since the distance-measurement apparatus 200 according to the second example embodiment includes a plurality of light sources 202, its configuration is more complicated than that of the distance-measurement apparatus 100 according to the first example embodiment. That is, the distance-measurement apparatus 100 according to the second example embodiment modulates light emitted from the light source 108, which emits light having the reference frequency f0, into an optical signal having a different frequency for each transmission pulse, and thereby generates a plurality of transmission pulses having frequency offsets different from each other. Therefore, the distance-measurement apparatus 200 according to the second example embodiment, which may have a simplified configuration, can properly measure a distance.

(Third Example Embodiment)

Next, a third example embodiment not falling within the scope of the claimed subject-matter will be described. The third example embodiment is different from the other example embodiments because the two transmission pulses constituting one transmission pulse set have the same frequency offset in the third example embodiment. Note that components in the third example embodiment that are substantially the same as those in the first example embodiment are denoted by the same reference numerals (or the same symbols). Further, in the following descriptions, descriptions of components that are substantially the same as those in the first example embodiment will be omitted as appropriate.

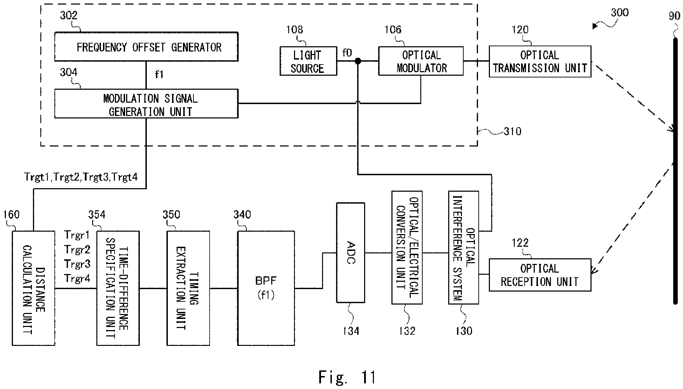

Fig. 11 shows a configuration of a distance-measurement apparatus 300 according to the third example embodiment. The distance-measurement apparatus 300 according to the third example embodiment includes, as a transmitting-side module, a frequency offset generator 302, a modulation signal generation unit 304, an optical modulator 106, a light source 108, and an optical transmission unit 120. The frequency offset generator 302, the modulation signal generation unit 304, the optical modulator 106, and the light source 108 constitute a pulse generation unit 310 that generates a transmission pulse set composed of a plurality of transmission pulses having a transmitting-time difference that differs according to the transmitting order. This pulse generation unit 310 corresponds to the generation unit 2 shown in Fig. 1.

Further, the distance-measurement apparatus 300 according to the third example embodiment includes, as a receiving-side module, an optical reception unit 122, an optical interference unit 130, an optical/electrical conversion unit 132, and an AD converter 134. Further, the distance-measurement apparatus 300 according to the third example embodiment includes a bandpass filter 340, a timing extraction unit 350, a time difference specification unit 354, and a distance calculation unit 160. The time difference specification unit 354 corresponds to the specification unit 8 shown in Fig. 1.

Further, in third example embodiment, it is assumed that the number of transmission pulses constituting a transmission pulse set is two. That is, the transmission pulse set Prset includes a transmission pulse Plst1 and a transmission pulse Plst2. Further, it is assumed that a time difference between times at which these two transmission pulses are transmitted differs according to the transmitting order of the transmission pulse set. In the third example embodiment, the frequency offset of each of the two transmission pulses constituting the transmission pulse set is set to a frequency offset f1. That is, the third example embodiment differs from the other example embodiments because the frequency offsets of the two transmission pulses are equal to each other in the third example embodiment.

The frequency offset generator 302 outputs frequency offset information which is information indicating a plurality of frequency offsets, i.e., a plurality of offsets from the reference frequency f0 to the modulation signal generation unit 304. Note that, in the third example embodiment, the frequency offset information indicates the frequency offset f1. Note that the frequency offset generator 302 may output the frequency offset information indicating the frequency offset f1 to the modulation signal generation unit 304 in conformity to the transmitting timings of the transmission pulses Plst1 and Plst2.

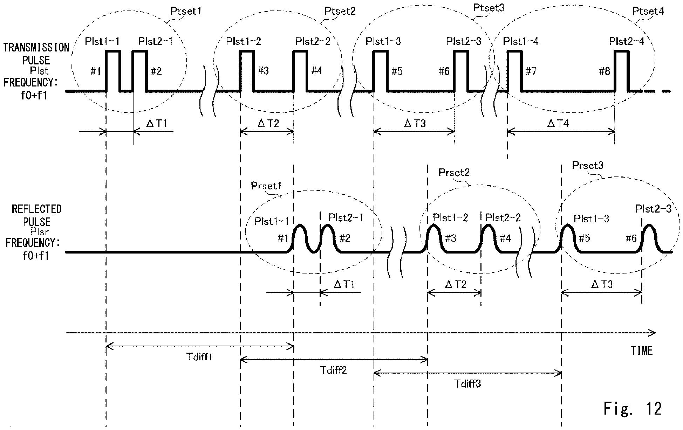

Note that the frequency offset generator 302 may output the frequency offset information indicating the frequency offset f1, and then, after a time difference ΔT has elapsed, output the frequency offset information indicating the frequency offset f1. Note that, in this example embodiment, this time difference ΔT differs according to the transmitting order of the transmission pulse set. For example, as shown in Fig. 12 (which will be described later), a time difference between frequency offset generation times (which correspond to the transmitting times) of transmission pulses Plst1 (Plst1-1) and Plst2 (Plst2-1), which constitute a first transmission pulse set Ptset1, is set to a time difference ΔT1. In this case, the frequency offset generator 302 may output two pieces of frequency offset information each of which indicates the frequency offset f1 at an interval of the time difference ΔT1. Further, a time difference between frequency offset generation times (which corresponds to the transmitting times) of transmission pulses Plst1 (Plst1-2) and Plst2 (Plst2-2), which constitute a second transmission pulse set Ptset2, is set to a time difference ΔT2. In this case, the frequency offset generator 302 may output two pieces of frequency offset information each of which indicates the frequency offset f1 at an interval of the time difference ΔT2.

The modulation signal generation unit 304 generates a modulation signal, which is used to generate transmission pulses, according to the frequency offset information received from the frequency offset generator 302. The modulation signal generation unit 304 outputs the generated modulation signal to the optical modulator 106. The optical modulator 106 generates a plurality of transmission pulses each having a frequency offset f1 by using the modulation signal received from the modulation signal generation unit 104 and the optical signal (a modulator input signal) received from the light source 108. The optical modulator 106 outputs an optical signal including the generated transmission pulses to the optical transmission unit 120.

Further, the modulation signal generation unit 304 outputs a measurement start trigger Trgt to the distance calculation unit 160 at a timing at which one of the transmission pulses in the transmission pulse set that corresponds to the frequency offset f1 is transmitted. Note that, in third example embodiment, the measurement start trigger Trgt indicates the transmitting timing of each of transmission pulses Plst1 (Plst1-1, Plst1-2, · · · ) that is transmitted earlier than the other in each of successively-transmitted transmission pulse sets. The modulation signal generation unit 304 outputs a measurement start trigger Trgtk to the distance calculation unit 160 at a timing at which a modulation signal of a transmission pulse Plst1-k of a kth transmission pulse set Ptsetk is output.

The optical transmission unit 120 transmits (emits) an optical signal including a plurality of transmission pulse sets (transmission pulses) to a distance-measurement-target object 90. The transmission pulses are reflected on the distance-measurement-target object 90 and travel toward the distance-measurement apparatus 300. The optical reception unit 122 receives an optical signal including a plurality of reflected pulses reflected on the distance-measurement-target object 90. Note that the frequency of each of the plurality of received reflected pulses is a frequency f0+f1. Further, the optical reception unit 122 repeatedly receives a reflected pulse set Prset which is a set of two reflected pulses Plsr each of which has the frequency f0+f1.

The operations performed by the optical interference unit 130, the optical/electrical conversion unit 132, and the AD converter 134 are substantially the same as those performed in the first example embodiment, and therefore descriptions thereof will be omitted. The center frequency of the bandpass filter 340 is the frequency f1. Therefore, the bandpass filter 340 lets an electric signal having the frequency f1 pass therethrough.

The timing extraction unit 350 functions as timing extraction means for extracting the receiving timing of the received reflected pulse. The timing extraction unit 350 extracts the receiving timings of reflected pulses Plsr1 and Plsr2 each having the frequency offset f1. Note that the timing extraction unit 350 may determine that a reflected pulse at an odd-numbered position in the receiving sequence is the reflected pulse Plsr1, and a reflected pulse at an even-numbered position in the receiving sequence is the reflected pulse Plsr2.

The time difference specification unit 354 specifies a time difference ΔT between times at which the reflected pulses Plsr1 and Plsr2 extracted by the timing extraction unit 350 are received. The time difference specification unit 354 specifies a transmission pulse set Ptset corresponding to the specified time difference ΔT. In this way, the reflected pulse set Prset is associated with the transmission pulse set Ptset. Then, the time difference specification unit 354 outputs a measurement stop trigger Trgr corresponding to the specified transmission pulse set Ptset to the distance calculation unit 160 at the receiving timing of the reflected pulse Plsr1. Note that the operation performed by the distance calculation unit 160 is substantially the same as that performed in the first example embodiment, and therefore the description thereof will be omitted.

Fig. 12 is a timing chart showing a relation between transmission pulses and reflected pulses according to the third example embodiment. The frequency of each of the transmission pulses Plst1 and Plst2 is a frequency f0+f1. That is, both of the transmission pulses Plst1 and Plst2 have the frequency offset f1.

Firstly, a first transmission pulse set Ptset1 is transmitted. The transmission pulse set Ptset1 is composed of a transmission pulse Plst1-1 and a transmission pulse Plst2-1. A time difference between the transmitting times of the transmission pulses Plst1-1 and Plst2-1 is set to a time difference ΔT1. Further, a measurement start trigger Trgt1 is output to the distance calculation unit 160 at the transmitting timing of the transmission pulse Plst1-1. Regarding the transmitting order of pulses each having the frequency offset f1, the transmission pulse Plst1-1 is the first (#1) and the transmission pulse Plst2-1 is the second (#2).

Next, a second transmission pulse set Ptset2 is transmitted. The transmission pulse set Ptset2 is composed of a transmission pulse Plst1-2 and a transmission pulse Plst2-2. A time difference ΔT2 between the transmitting times of the transmission pulses Plst1-2 and Plst2-2 is different from the time difference ΔT1 in the transmission pulse set Ptset1. Further, a measurement start trigger Trgt2 is output to the distance calculation unit 160 at the transmitting timing of the transmission pulse Plst1-2. Regarding the transmitting order of pulses each having the frequency offset f1, the transmission pulse Plst1-2 is the third (#3) and the transmission pulse Plst2-2 is the fourth (#4).

Next, a third transmission pulse set Ptset3 is transmitted. The transmission pulse set Ptset3 is composed of a transmission pulse Plst1-3 and a transmission pulse Plst2-3. A time difference ΔT3 between the transmitting times of the transmission pulses Plst1-3 and Plst2-3 is different from both the time difference ΔT1 in the transmission pulse set Ptset1 and the time difference ΔT2 in the transmission pulse set Ptset2. Further, a measurement start trigger Trgt3 is output to the distance calculation unit 160 at the transmitting timing of the transmission pulse Plst1-3. Regarding the transmitting order of pulses each having the frequency offset f1, the transmission pulse Plst1-3 is the fifth (#5) and the transmission pulse Plst2-3 is the sixth (#6).

Next, a fourth transmission pulse set Ptset4 is transmitted. The transmission pulse set Ptset4 is composed of a transmission pulse Plst1-4 and a transmission pulse Plst2-4. A time difference ΔT4 between the transmitting times of the transmission pulse Plst1-4 and Plst2-4 is different from all of the time differences ΔT1, ΔT2 and ΔT3. Therefore, the time differences ΔT1, ΔT2, ΔT3 and ΔT4 are different from each other. Further, a measurement start trigger Trgt4 is output to the distance calculation unit 160 at the transmitting timing of the transmission pulse Plst1-4. Regarding the transmitting order of pulses each having the frequency offset f1, the transmission pulse Plst1-4 is the seventh (#7) and the transmission pulse Plst2-4 is the eighth (#8).

Note that the time differences ΔT1, ΔT2, ΔT3 and ΔT4 between the transmitting times are much smaller than the transmission intervals of the transmission pulses Plst1 and Plst2. Therefore, a transmission pulse set Ptset is not overlapped by the next transmission pulse set Ptset. Therefore, the transmission pulse Plst1 is transmitted at an odd-numbered position in the transmitting sequence, and the transmission pulse Plst2 is transmitted at even-numbered position in the transmitting sequence.

Meanwhile, after the transmission pulse Plst1-2 is transmitted, a reflected pulse Plsr1-1 having the frequency offset f1 is received. Further, at substantially the same timing, a reflected pulse Plsr2-1 having the frequency offset f1 is received. The timing extraction unit 350 can determine that a reflected pulse at an odd-numbered position in the receiving sequence (First: #1) is the reflected pulse Plsr1-1. Then, the timing extraction unit 350 extracts the receiving timing of this reflected pulse Plsr1-1. Further, the timing extraction unit 350 can determine that a reflected pulse at an even-numbered position in the receiving sequence (Second: #2) is the reflected pulses Plsr2-1. Then, the timing extraction unit 350 extracts the receiving timing of this reflected pulse Plsr2-1.

The time difference specification unit 354 specifies a time difference between the receiving timings of the reflected pulses Plsr1-1 and Plsr2-1. In this case, the time difference specification unit 354 determines that the time difference between the receiving timings of the reflected pulses Plsr1-1 and Plsr2-1 is the time difference ΔT1. Therefore, the time difference specification unit 354 determines that the reflected pulse set Prset1, which is a set of the reflected pulses Plsr1-1 and Plsr2-1, corresponds to the first transmission pulse set Ptset1 related to the time difference ΔT1. Therefore, the time difference specification unit 354 outputs a measurement stop trigger Trgr1 corresponding to the measurement start trigger Trgt1 to the distance calculation unit 160 at the receiving timing of the reflected pulse Plsr1-1. At this point, the distance calculation unit 160 calculates a distance to the distance-measurement-target object 90 from a time difference Tdiff1 between the measurement start trigger Trgt1 and the measurement stop trigger Trgr1.

Further, after the transmission pulse Plst1-3 is transmitted, a reflected pulse Plsr1-2 having the frequency offset f1 is received. Further, at substantially the same timing, a reflected pulse Plsr2-2 having the frequency offset f1 is received. The timing extraction unit 350 can determine that a reflected pulse at an odd-numbered position in the receiving sequence (Third: #3) is the reflected pulse Plsr1-2. Further, the timing extraction unit 350 extracts the receiving timing of this reflected pulse Plsr1-2. Further, the timing extraction unit 350 can determine that a reflected pulse at an even-numbered position in the receiving sequence (Fourth: #4) is the reflected pulse Plsr2-2. Further, the timing extraction unit 350 extracts the receiving timing of this reflected pulse Plsr2-2.

The time difference specification unit 354 specifies a time difference between the receiving timings of the reflected pulses Plsr1-2 and Plsr2-2. In this case, the time difference specification unit 354 determines that the time difference between the receiving timings of the reflected pulses Plsr1-2 and Plsr2-2 is the time difference ΔT2. Therefore, the time difference specification unit 354 determines that the reflected pulse set Prset2, which is a set of the reflected pulses Plsr1-2 and Plsr2-2, corresponds to the second transmission pulse set Ptset2 related to the time difference ΔT2. Therefore, the time difference specification unit 354 outputs a measurement stop trigger Trgr2 corresponding to the measurement start trigger Trgt2 to the distance calculation unit 160 at the receiving timing of the reflected pulse Plsr1-2. At this point, the distance calculation unit 160 calculates a distance to the distance-measurement-target object 90 from a time difference Tdiff2 between the measurement start trigger Trgt2 and the measurement stop trigger Trgr2.

Further, after the transmission pulse Plst1-4 is transmitted, a reflected pulse Plsr1-3 having the frequency offset f1 is received. Further, at substantially the same timing, a reflected pulse Plsr2-3 having the frequency offset f1 is received. The timing extraction unit 350 can determine that a reflected pulse at an odd-numbered position in the receiving sequence (Fifth: #5) is the reflected pulse Plsr1-3. Further, the timing extraction unit 350 extracts the receiving timing of this reflected pulse Plsr1-3. Further, the timing extraction unit 350 can determine that a reflected pulse at an even-numbered position in the receiving sequence (Sixth: #6) are the reflected pulses Plsr2-3. Further, the timing extraction unit 350 extracts the receiving timing of this reflected pulse Plsr2-3.

The time difference specification unit 354 specifies a time difference between the receiving timings of the reflected pulses Plsr1-3 and Plsr2-3. In this case, the time difference specification unit 354 determines that the time difference between the receiving timings of the reflected pulses Plsr1-3 and Plsr2-3 is the time difference ΔT3. Therefore, the time difference specification unit 354 determines that the reflected pulse set Prset3, which is a set of the reflected pulses Plsr1-3 and Plsr2-3, corresponds to the third transmission pulse set Ptset3 related to the time difference ΔT3. Therefore, the time difference specification unit 354 outputs a measurement stop trigger Trgr3 corresponding to the measurement start trigger Trgt3 to the distance calculation unit 160 at the receiving timing of the reflected pulse Plsr1-3. At this point, the distance calculation unit 160 calculates a distance to the distance-measurement-target object 90 from a time difference Tdiff3 between the measurement start trigger Trgt3 and the measurement stop trigger Trgr3.

As described above, the distance-measurement apparatus 300 according to the third example embodiment can specify the ordinal position of the transmission pulse set that corresponds to the received reflected pulse (the reflected pulse set) in the transmitting sequence by specifying the time difference between times at which two reflected pulses constituting the reflected pulse set are received. Therefore, in third example embodiment, similarly to the first example embodiment, the distance calculation unit 160 can properly calculate a distance to a distance-measurement-target object 90, on which the transmission pulse Plst is reflected, even when the flight time of the optical signal is longer than the pulse period.

Further, the distance-measurement apparatus 300 according to the third example embodiment is configured to transmit a transmission pulse set composed of two transmission pulses having the same frequency offset with respect to the reference frequency. Therefore, in the third example embodiment, only one frequency offset is required. Therefore, it is unnecessary to change the frequency every time a transmission pulse is transmitted, so that the frequency band required for the transmission/reception performed by the distance-measurement apparatus 300 may be narrowed even further as compared to that in the first example embodiment. Further, since it is unnecessary to change the frequency every time a transmission pulse is transmitted, it is possible to simplify the configuration of the transmitting-side module and the receiving-side module as compared to the case where it is necessary to change the frequency every time a transmission pulse is transmitted.

(Fourth Example Embodiment)

Next, a fourth example embodiment will be described. The fourth example embodiment is different from the other example embodiments because the number of transmission pulses that constitute one transmission pulse set is three or more in the fourth example embodiment. In the below-described example, a case where the number of transmission pulses constituting one transmission pulse set is three is shown. However, the number of transmission pulses constituting one transmission pulse set may be four or more. Note that components in the fourth example embodiment that are substantially the same as those in the first example embodiment are denoted by the same reference numerals (or the same symbols). Further, in the following descriptions, descriptions of components that are substantially the same as those in the first example embodiment will be omitted as appropriate.

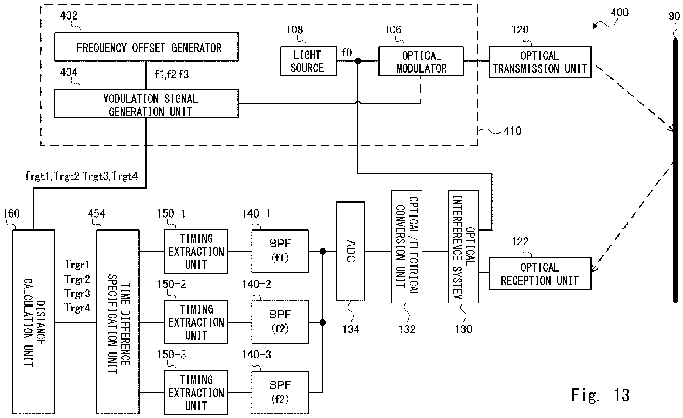

Fig. 13 shows a configuration of a distance-measurement apparatus 400 according the fourth example embodiment. The distance-measurement apparatus 400 according to the fourth example embodiment includes, as a transmitting-side module, a frequency offset generator 402, a modulation signal generation unit 404, an optical modulator 106, a light source 108, and an optical transmission unit 120. The frequency offset generator 402, the modulation signal generation unit 404, the optical modulator 106, and the light source 108 constitute a pulse generation unit 410 that generates a transmission pulse set composed of a plurality of transmission pulses having a transmitting-time difference that differs according to the transmitting order. This pulse generation unit 410 corresponds to the generation unit 2 shown in Fig. 1.

Further, the distance-measurement apparatus 400 according the fourth example embodiment includes, as a receiving-side module, an optical reception unit 122, an optical interference unit 130, an optical/electrical conversion unit 132, and an AD converter 134. Further, the distance-measurement apparatus 400 according the fourth example embodiment includes bandpass filters 140-1, 140-2 and 140-3, timing extraction units 150-1, 150-2 and 150-3, a time difference specification unit 454, and a distance calculation unit 160. The time difference specification unit 454 corresponds to the specification unit 8 shown in Fig. 1.

Further, in the fourth example embodiment, it is assumed that the number of transmission pulses constituting the transmission pulse set is three. That is, the transmission pulse set includes a transmission pulse Plst1, a transmission pulse Plst2, and a transmission pulse Plst3. Further, it is assumed that a time difference between times at which these three transmission pulses are transmitted differs according to the transmitting order of the transmission pulse set. Further, in the fourth example embodiment, it is assumed that the frequency offsets of the three transmission pulses constituting the transmission pulse set are set to frequencies f1, f2 and f3, respectively. Therefore, the bandpass filters 140-1, 140-2 and 140-3 correspond to the frequency offsets f1, f2 and f3, respectively. Similarly, the timing extraction units 150-1, 150-2 and 150-3 correspond to the frequency offsets f1, f2 and f3, respectively.

The frequency offset generator 402 outputs frequency offset information which is information indicating a plurality of frequency offsets, i.e., a plurality of offsets from a reference frequency f0 to the modulation signal generation unit 404. Note that, in the fourth example embodiment, the frequency offset information indicates the frequency offsets f1, f2 and f3. Note that the frequency offset generator 402 may output the frequency offset information indicating the frequency offsets f1, f2 and f3 to the modulation signal generation unit 404 in conformity to the transmitting timings of the transmission pulses Plst1, Plst2 and Plst3, respectively.

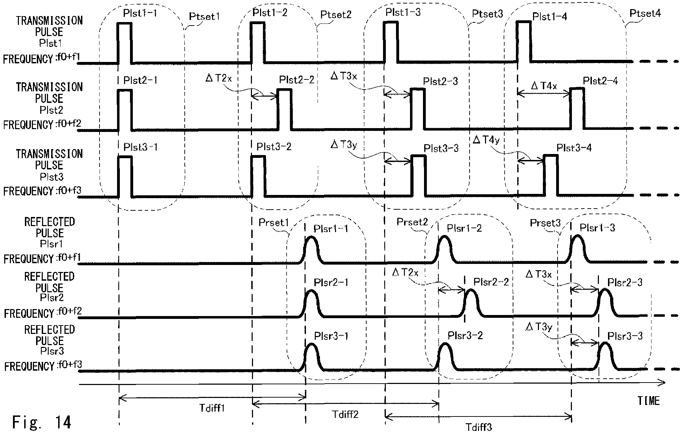

Note that the frequency offset generator 402 may output the frequency offset information indicating the frequency offset f1, and then, after a time difference ΔTx has elapsed, output the frequency offset information indicating the frequency offset f2. Further, the frequency offset generator 402 may output the frequency offset information indicating the frequency offset f1, and then, after a time difference ΔTy has elapsed, output the frequency offset information indicating the frequency offset f3. In the fourth example embodiment, at least one of the time differences $\Delta Tx$ and $\Delta Ty$ differs according to the transmitting order of the transmission pulse set. That is, in the fourth example embodiment, at least one of the time differences ($\Delta Tx$ and $\Delta Ty$) between a time at which one of the three transmission pulses constituting the transmission pulse set is transmitted and times at which the other two transmission pulses are transmitted respectively differs according to the transmitting order of the transmission pulse set. Its details will be described later with reference to Fig. 14.

The modulation signal generation unit 404 generates a modulation signal, which is used to generate transmission pulses, according to the frequency offset information received from the frequency offset generator 402. The modulation signal generation unit 404 outputs the generated modulation signal to the optical modulator 106. The optical modulator 106 generates a plurality of transmission pulses having the frequency offsets f1, f2 and f3 by using the modulation signal received from the modulation signal generation unit 104 and the optical signal (a modulator input signal) received from the light source 108. The optical modulator 106 outputs an optical signal including the generated transmission pulse to the optical transmission unit 120.

Further, the modulation signal generation unit 404 outputs a measurement start trigger Trgt to the distance calculation unit 160 at a timing at which a transmission pulse corresponding to the frequency offset f1 is transmitted. Note that, in the fourth example embodiment, the measurement start trigger Trgt indicates the transmitting timing of each of the transmission pulses Plst1 included in each of successively-transmitted transmission pulse sets. The modulation signal generation unit 404 outputs a measurement start trigger Trgtk to the distance calculation unit 160 at a timing at which a modulation signal of a transmission pulse Plst1-k of a kth transmission pulse set Ptsetk is output.

The optical transmission unit 120 transmits (emits) an optical signal including a plurality of transmission pulse sets (transmission pulses) to a distance-measurement-target object 90. The transmission pulses are reflected on the distance-measurement-target object 90 and travel toward the distance-measurement apparatus 400. The optical reception unit 122 receives an optical signal including a plurality of reflected pulses reflected on the distance-measurement-target object 90. Note that the frequencies of the plurality of received reflected pulses are frequencies f0+f1, f0+f2 and f0+f3. Further, the optical reception unit 122 repeatedly receives a reflected pulse set Prset which is a set of a reflected pulse Plsr1 having the frequency f0+f1, a reflected pulse Plsr2 having the frequency f0+f2, and a reflected pulse Plsr3 having the frequency f0+f3.

The operations performed by the optical interference unit 130, the optical/electrical conversion unit 132, and the AD converter 134 are substantially the same as those performed in the first example embodiment, and therefore descriptions thereof will be omitted. The center frequencies of the bandpass filters 140-1, 140-2 and 140-3 are the frequencies f1, f2 and f3, respectively. Therefore, the bandpass filters 140-1, 140-2 and 140-3 let electric signals indicating the frequencies f1, f2 and f3, respectively, pass therethrough.

The timing extraction unit 150 functions as timing extraction means for extracting the receiving timing of the received reflected pulse. The timing extraction units 150-1, 150-2 and 150-3 extract the receiving timings of reflected pulses Plsr1, Plsr2 and Plsr3 having the frequency offsets f1, f2 and f3, respectively.

The time difference specification unit 454 specifies a pair of time differences $\Delta T$ ($\Delta Tx$ and $\Delta Ty$) between times at which the reflected pulses having the frequency offsets f1, f2 and f3 extracted by the timing extraction units 150-1, 150-2 and 150-3, respectively, are received. The time difference specification unit 454 specifies a transmission pulse set Ptset corresponding to the specified pair of time differences $\Delta T$. In this way, the reflected pulse set Prset is associated with the transmission pulse set Ptset. Then, the time difference specification unit 454 outputs a measurement stop trigger Trgr corresponding to the specified transmission pulse set Ptset to the distance calculation unit 160 at the receiving timing of the reflected pulse having the frequency offset f1. Its details will be described later with reference to Fig. 14.

Fig. 14 is a timing chart showing a relation between transmission pulses and reflected pulses according the fourth example embodiment. The frequencies of the transmission pulses Plst1, Plst2 and Plst3 are frequencies f0+f1, f0+f2 and f0+f3, respectively. That is, the transmission pulse Plst1 has a frequency offset f1 and the transmission pulse Plst2 has a frequency offset f2. Further, the transmission pulse Plst3 has a frequency offset f3.

Firstly, a first transmission pulse set Ptset1 is transmitted. The transmission pulse set Ptset1 is composed of a transmission pulse Plst1-1 having a frequency offset f1, a transmission pulse Plst2-1 having a frequency offset f2, and a transmission pulse Plst3-1 having a frequency offset f3. It is assumed that a time difference $\Delta T1x$ between the transmitting times of the transmission pulses Plst1-1 and Plst2-1 is zero. That is, the transmission pulses Plst1-1 and Plst2-1 are transmitted at the same timing. Further, it is assumed that a time difference $\Delta T1y$ between the transmitting times of the transmission pulses Plst1-1 and Plst3-1 is zero. That is, the transmission pulses Plst1-1 and Plst3-1 are transmitted at the same timing. Further, a measurement start trigger Trgt1 is output to the distance calculation unit 160 at the transmitting timing of the transmission pulse Plst1-1.

Next, a second transmission pulse set Ptset2 is transmitted. The transmission pulse set Ptset2 is composed of a transmission pulse Plst1-2 having the frequency offset f1, a transmission pulse Plst2-2 having the frequency offset f2, and a transmission pulse Plst3-2 having the frequency offset f3. The time difference between the transmitting times of the transmission pulses Plst1-2 and Plst2-2 is set to a time difference $\Delta$T2x. Further, it is assumed that the time difference $\Delta$T2y between the transmitting times of the transmission pulses Plst1-2 and Plst3-2 is zero. That is, the transmission pulses Plst1-2 and Plst3-2 are transmitted at the same timing.

Note that the time difference $\Delta$T2x is different from the time difference $\Delta$T1x in the transmission pulse set Ptset1. Therefore, a pair of time differences $\Delta$T ($\Delta$Tx and $\Delta$Ty) between the transmitting times of the transmission pulses Plst constituting the first transmission pulse set Ptset1 is different from that of the second transmission pulse set Ptset2. That is, at least one of the time differences $\Delta$Tx and $\Delta$Ty of the transmitting times of the transmission pulses Plst constituting the first transmission pulse set Ptset1 is different from that of the second transmission pulse set Ptset2 (in this example, $\Delta$T1x $\neq$ $\Delta$T2x). Further, a measurement start trigger Trgt2 is output to the distance calculation unit 160 at the transmitting timing of the transmission pulse Plst1-2.

Next, a third transmission pulse set Ptset3 is transmitted. The transmission pulse set Ptset3 is composed of a transmission pulse Plst1-3 having the frequency offset f1, a transmission pulse Plst2-3 having the frequency offset f2, and a transmission pulse Plst3-3 having the frequency offset f3. The time difference between the transmitting times of the transmission pulses Plst1-3 and Plst2-3 is set to a time difference $\Delta$T3x. Further, the time difference between the transmitting times of the transmission pulses Plst1-3 and Plst3-3 is set to a time difference $\Delta$T3y.

Note that the time difference $\Delta$T3y is different from the time difference $\Delta$T2y in the transmission pulse set Ptset2. Therefore, a pair of time differences $\Delta$T ($\Delta$Tx and $\Delta$Ty) between the transmitting times of the transmission pulses Plst constituting the second transmission pulse set Ptset2 is different from that of the third transmission pulse set Ptset3. That is, at least one of the time differences $\Delta$Tx and $\Delta$Ty of the transmitting times of the transmission pulses Plst constituting the second transmission pulse set Ptset2 is different from that of the third transmission pulse set Ptset3 (in this example, $\Delta$T2y $\neq$ $\Delta$T3y). Similarly, since relations $\Delta$T1x $\neq$ $\Delta$T3x and $\Delta$T1y $\neq$ $\Delta$T3y hold, the pair of time differences $\Delta$T ($\Delta$Tx and $\Delta$Ty) between the transmitting times of the transmission pulses Plst constituting the first transmission pulse set Ptset1 is different from that of the third transmission pulse set Ptset3. Further, a measurement start trigger Trgt3 is output to the distance calculation unit 160 at the transmitting timing of the transmission pulse Plst1-3.

Next, a fourth transmission pulse set Ptset4 is transmitted. The transmission pulse set Ptset4 is composed of a transmission pulse Plst1-4 having the frequency offset f1, a transmission pulse Plst2-4 having the frequency offset f2, and a transmission pulse Plst3-4 having the frequency offset f3. The time difference between the transmitting times of the transmission pulses Plst1-4 and Plst2-4 is set to a time difference $\Delta$T4x. Further, the time difference between the transmitting times of the transmission pulses Plst1-4 and Plst3-4 is set to a time difference $\Delta$T4y.

Note that the time difference $\Delta$T4x is different from the time difference $\Delta$T3x in the transmission pulse set Ptset3. Therefore, a pair of time differences $\Delta$T ($\Delta$Tx and $\Delta$Ty) between the transmitting times of the transmission pulses Plst constituting the third transmission pulse set Ptset3 is different from that of the fourth transmission pulse set Ptset4. That is, at least one of the time differences $\Delta$Tx and $\Delta$Ty of the transmitting times of the transmission pulses Plst constituting the third transmission pulse set Ptset3 is different from that of the fourth transmission pulse set Ptset4 (in this example, $\Delta$T3x $\neq$ $\Delta$T4x). Similarly, since relations $\Delta$T1x $\neq$ $\Delta$T4x and $\Delta$T1y $\neq$ $\Delta$T4y hold, the pair of time differences $\Delta$T ($\Delta$Tx and $\Delta$Ty) between the transmitting times of the transmission pulses Plst constituting the first transmission pulse set Ptset1 is different from that of the fourth transmission pulse set Ptset4. Further, since relations $\Delta$T2x $\neq$ $\Delta$T4x and $\Delta$T2y $\neq$ $\Delta$T4y hold, the pair of time differences $\Delta$T ($\Delta$Tx and $\Delta$Ty) between the transmitting times of the transmission pulses Plst constituting the second transmission pulse set Ptset2 is different from that of the fourth transmission pulse set Ptset4. Further, a measurement start trigger Trgt4 is output to the distance calculation unit 160 at the transmitting timing of the transmission pulse Plstl-4.

Meanwhile, after the transmission pulse Plst1-2 is transmitted, a reflected pulse Plsr1-1 having the frequency offset f1 is received. Further, at substantially the same timing, a reflected pulse Plsr2-1 having the frequency offset f2 and a reflected pulse Plsr3-1 having the frequency offset f3 are received. The reflected pulse Plsr1-1 is separated by the bandpass filter 140-1. Further, the receiving timing of the reflected pulse Plsr1-1 is extracted by the timing extraction unit 150-1. Similarly, the reflected pulse Plsr2-1 is separated by the bandpass filter 140-2. Further, the receiving timing of the reflected pulse Plsr2-1 is extracted by the timing extraction unit 150-2. The reflected pulse Plsr3-1 is separated by the bandpass filter 140-3. Further, the receiving timing of the reflected pulse Plsr3-1 is extracted by the timing extraction unit 150-3.

The time difference specification unit 454 specifies a time difference between the receiving timings of the reflected pulses Plsr1-1 and Plsr2-1, and a time difference between the receiving timings of the reflected pulses Plsr1-1 and Plsr3-1. In this case, the time difference specification unit 454 determines that the time difference between the receiving timings of the reflected pulses Plsr1-1 and Plsr2-1 is the time difference $\Delta$T1x, i.e., is zero. Further, the time difference specification unit 454 determines that the time difference between the receiving timings of the reflected pulses Plsr1-1 and Plsr3-1 is the time difference $\Delta$T1y, i.e., is zero. Note that a set of the reflected pulses Plsr1-1, Plsr2-1 and Plsr3-1 is referred to as a reflected pulse set Prset1.

In this case, the time difference specification unit 454 determines that the reflected pulse set Prset1 corresponds to the first transmission pulse set Ptset1 related to the pair of time differences ∆T (∆T1x and ∆T1y). Therefore, the time difference specification unit 454 outputs a measurement stop trigger Trgr1 corresponding to the measurement start trigger Trgt1 to the distance calculation unit 160 at the receiving timing of the reflected pulse Plsr1-1 having the frequency offset f1. At this point, the distance calculation unit 160 calculates a distance to the distance-measurement-target object 90 from a time difference Tdiff1 between the measurement start trigger Trgt1 and the measurement stop trigger Trgr1.

Further, after the transmission pulse Plst1-3 is transmitted, a reflected pulse Plsr1-2 having the frequency offset f1 is received. Further, at substantially the same timing, a reflected pulse Plsr2-2 having the frequency offset f2 and a reflected pulse Plsr3-2 having the frequency offset f3 are received. The reflected pulse Plsr1-2 is separated by the bandpass filter 140-1. Further, the receiving timing of the reflected pulse Plsr1-2 is extracted by the timing extraction unit 150-1. Similarly, the reflected pulse Plsr2-2 is separated by the bandpass filter 140-2. Further, the receiving timing of the reflected pulse Plsr2-2 is extracted by the timing extraction unit 150-2. The reflected pulse Plsr3-2 is separated by the bandpass filter 140-3. Further, the receiving timing of the reflected pulse Plsr3-2 is extracted by the timing extraction unit 150-3.

The time difference specification unit 454 specifies a time difference between the receiving timings of the reflected pulses Plsr1-2 and Plsr2-2, and a time difference between the receiving timings of the reflected pulses Plsr1-2 and Plsr3-2. In this case, the time difference specification unit 454 determines that the time difference between the receiving timings of the reflected pulses Plsr1-2 and Plsr2-2 is the time difference ∆T2x. Further, the time difference specification unit 454 determines that the time difference between the receiving timings of the reflected pulses Plsr1-2 and Plsr3-2 is the time difference ∆T2y, i.e., is zero. Note that a set of the reflected pulses Plsr1-2, Plsr2-2, and Plsr3-2 is referred to as a reflected pulse set Prset2.

In this case, the time difference specification unit 454 determines that the reflected pulse set Prset2 corresponds to the second transmission pulse set Ptset2 related to the pair of time differences ∆T (∆T2x and ∆T2y). Therefore, the time difference specification unit 454 outputs a measurement stop trigger Trgr2 corresponding to the measurement start trigger Trgt2 to the distance calculation unit 160 at the receiving timing of the reflected pulse Plsr1-2 having the frequency offset f1. At this point, the distance calculation unit 160 calculates a distance to the distance-measurement-target object 90 from a time difference Tdiff2 between the measurement start trigger Trgt2 and the measurement stop trigger Trgr2.

Further, after the transmission pulse Plst1-4 is transmitted, a reflected pulse Plsr1-3 having the frequency offset f1 is received. Further, at substantially the same timing, a reflected pulse Plsr2-3 having the frequency offset f2 and a reflected pulse Plsr3-3 having the frequency offset f3 are received. The reflected pulse Plsr1-3 is separated by the bandpass filter 140-1. Further, the receiving timing of the reflected pulse Plsr1-3 is extracted by the timing extraction unit 150-1. Similarly, the reflected pulse Plsr2-3 is separated by the bandpass filter 140-2. Further, the receiving timing of the reflected pulse Plsr2-3 is extracted by the timing extraction unit 150-2. The reflected pulse Plsr3-3 is separated by the bandpass filter 140-3. Further, the receiving timing of the reflected pulse Plsr3-3 is extracted by the timing extraction unit 150-3.

The time difference specification unit 454 specifies a time difference between the receiving timings of the reflected pulses Plsr1-3 and Plsr2-3, and a time difference between the receiving timings of the reflected pulses Plsr1-3 and Plsr3-3. In this case, the time difference specification unit 454 determines that the time difference between the receiving timings of the reflected pulses Plsr1-3 and Plsr2-3 is the time difference ∆T3x. Further, the time difference specification unit 454 determines that the time difference between the receiving timings of the reflected pulses Plsr1-3 and Plsr3-3 is the time difference ∆T3y. Note that a set of the reflected pulses Plsr1-3, Plsr2-3 and Plsr3-3 is referred to as a reflected pulse set Prset3.

In this case, the time difference specification unit 454 determines that the reflected pulse set Prset3 corresponds to the third transmission pulse set Ptset3 related to the pair of time differences ∆T (∆T3x and ∆T3y). Therefore, the time difference specification unit 454 outputs a measurement stop trigger Trgr3 corresponding to the measurement start trigger Trgt3 to the distance calculation unit 160 at the receiving timing of the reflected pulse Plsr1-3 having the frequency offset f1. At this point, the distance calculation unit 160 calculates a distance to the distance-measurement-target object 90 from a time difference Tdiff3 between the measurement start trigger Trgt3 and the measurement stop trigger Trgr3.

As described above, the distance-measurement apparatus 400 according to the fourth example embodiment can specify the ordinal position of the transmission pulse (the transmission pulse set) that corresponds to the received reflected pulses (the reflected pulse set) in the transmitting sequence by specifying the time difference between times at which three reflected pulses constituting the reflected pulse set are received. Therefore, in fourth example embodiment, similarly to the first example embodiment and the like, the distance calculation unit 160 can properly calculate a distance to a distance-measurement-target object 90, on which the transmission pulse Plst is reflected, even when the flight time of the optical signal is longer than the pulse period.

Further, the distance-measurement apparatus 400 according the fourth example embodiment is configured to transmit a transmission pulse set composed of three transmission pulses. Therefore, the number of time differences between the transmitting times of the transmission pulses in each transmission pulse set becomes two, i.e., time differences ΔTx and ΔTy. Note that in the first example embodiment, the number of time differences between the transmitting times of the transmission pulses in each transmission pulse set is one. Therefore, in order to make the time differences different from one another according to the transmitting order of the transmission pulse set, it is necessary to increase the length of the time difference as the number of transmission pulse sets increases. However, in the fourth example embodiment, since the number of time differences is two, i.e., time differences ΔTx and ΔTy, it is possible to make the time differences different from one another according to the transmitting order of the transmission pulse set by changing at least one of the time differences ΔTx and ΔTy. In other words, one of the time differences ΔTx and ΔTy related to a given transmission pulse set may be equal to a corresponding time difference related to other transmission pulse sets. For example, in the example shown in Fig. 14, the time differences may be set so that relations ΔT2x = ΔT3x = ΔT3y = ΔT4y hold. In this way, it is possible to make the time difference ΔT4x shown in Fig. 14 shorter than the time difference ΔT4 shown in Fig. 9. As a result, it is possible to prevent or reduce the increase of the time difference between the transmitting times of transmission pulses constituting a transmission pulse set, which would otherwise need to be increased in order to distinguish transmission pulse sets from one another.

(Modified Example)

Further, although, in the above-described example embodiments, the optical signal is separated for each of the frequency offsets of the reflected pulses by using a bandpass filter(s), the present invention is not limited to such a configuration. The signal may be separated by using a component(s) other than the bandpass filter. Further, if the receiving timing of the reflected pulse can be extracted for each frequency offset, the received optical signal does not need to be separated. However, by separating the optical signal for each of the frequency offsets of the reflected pulses by using the bandpass filter, it is possible to perform the distance-measurement processing at a high speed as described above. Further, by separating the optical signal for each of the frequency offsets of the reflected pulses by using the bandpass filter, the receiving timing of each reflected pulse can be easily extracted.

Further, the distance calculation unit 160 may take the processing time in the optical modulator 106 and the like into consideration when determining the timing at which the measurement start trigger is output. In other words, the distance calculation unit 160 may take account of the processing time from when the measurement start trigger is received to when the transmission pulse corresponding to the measurement start trigger is actually transmitted. In this case, the distance calculation unit 160 may use the timing that is obtained by adding the processing time in the optical modulator 106 and the like to the output timing of the measurement start trigger as the start timing of the distance measurement. Note that it is assumed that the processing time in the optical modulator 106 and the like is roughly constant.

Similarly, the distance calculation unit 160 may take the processing time of the optical interference unit 130 and the like until the measurement stop trigger is output into consideration when determining the measurement stop trigger. In other words, the distance calculation unit 160 may take account of the processing time from when the reflected pulse is received by the optical reception unit 122 to when the measurement stop trigger is output by the timing extraction unit 150. In this case, the distance calculation unit 160 may use the timing that is obtained by subtracting the processing time of the optical interference unit 130 and the like from the output timing of the measurement stop trigger as the end timing of the distance measurement. Note that it is assumed that the processing time in the optical interference unit 130 and the like is roughly constant.

Alternatively, the modulation signal generation unit 104 may output a measurement start trigger indicating a time at which the transmission pulse is transmitted while taking into account of the processing time until the transmission pulse is transmitted by the optical transmission unit 120 located in the subsequent stage (i.e., located on the output side thereof). That is, when the time at which the modulation signal is generated is represented by t1 and the processing time in the optical modulator 106 and the like is represented by Δt1, the modulation signal generation unit 104 may output a measurement start trigger indicating a time (t1+Δt1). The same applies to the transmission pulse generation unit 204 according to the second example embodiment, the modulation signal generation unit 304 according to the third example embodiment, and the modulation signal generation unit 404 according to the fourth example embodiment. Similarly, the timing extraction unit 150 may output a measurement stop trigger indicating a time at which the reflected pulse is received while taking account of the processing time in the optical interference unit 130 and the like located in the preceding stage (i.e., located on the input side thereof). That is, when the time at which the timing extraction unit 150 receives a signal from the bandpass filter 140 is represented by t2 and the processing time in the optical interference unit 130 and the like is represented by Δt2, the timing extraction unit 150 may output a measurement stop trigger indicating a time (t2-Δt2). In this case, the distance calculation unit 160 may calculate the distance R, by using the Expression 1, according to a relation Td = (t2-Δt2)-(t1+Δt1). The same applies to the timing extraction unit 350 in the third example embodiment.

Further, the frequency offset generator 102 may output frequency offset information indicating all the frequency offsets f1 and f2 to the modulation signal generation unit 104. In this case, the modulation signal generation unit 104 may generate modulation signals corresponding to the frequency offsets f1 and f2, respectively, at each pulse period Tp.

Further, although it has been assumed that both of the pulse periods Tp1 and Tp2 of the transmission pulses Plst1 and Plst2 are constant in the first example embodiment, the present invention is not limited to such a configuration. In the example embodiment, any of the pulse periods of the transmission pulses does not need to be constant. Therefore, the period from the transmission of the first transmission pulse Plst1-1 to the transmission of the second transmission pulse Plst1-2 may not be equal to the period from the transmission of the second transmission pulse Plst1-2 to the transmission of the third transmission pulse Plst1-3. The same applies to the transmission pulses Plst2 and Plst3.

Further, in the above-described example embodiments, the transmission pulse used for the actual distance measurement (i.e., the transmission pulse with which the measurement start trigger is output simultaneously) is the transmission pulse Plst1, i.e., the transmission pulse that is transmitted earliest in the transmission pulse set. However, the present invention is not limited to such a configuration. The transmission pulse used for the distance measurement may be any of the transmission pulses constituting the transmission pulse set. That is, a distance may be measured by using the transmission pulse Plst2. In this case, the measurement stop trigger is output at the receiving timing of the reflected pulse Plsr2. Alternatively, the average time of the transmitting times of a plurality of transmission pulses constituting a transmission pulse set may be used as the output timing of the measurement start trigger.

Further, although the frequency offsets of the three transmission pulses constituting the transmission pulse set are different from one another in the above-described fourth example embodiment, the present invention is not limited to such a configuration. If it is possible to specify the time difference between the receiving times of the reflected pulses on the receiving side, at least two of the frequency offsets of the three transmission pulses constituting the transmission pulse set may be equal to each other.

Note that although the example embodiment is described as a hardware configuration in the above-described example embodiments, the example embodiment is not limited to the hardware configurations. In the example embodiment, at least one processing in each circuit in the distance-measurement apparatus can also be implemented by having a CPU (Central Processing Unit) execute a computer program.

In the above-described examples, the program can be stored and provided to a computer using any type of non-transitory computer readable media. Non-transitory computer readable media include any type of tangible storage media. Examples of non-transitory computer readable media include magnetic storage media (e.g., floppy disks, magnetic tapes, hard disk drives, etc.), optical magnetic storage media (e.g., magneto-optical disks), CD-ROM (Read Only Memory), CD-R, CD-R/W, and semiconductor memories (e.g., mask ROM, PROM (Programmable ROM), EPROM (Erasable PROM), flash ROM, and RAM (Random Access Memory)). The program may be provided to a computer using any type of transitory computer readable media. Examples of transitory computer readable media include electric signals, optical signals, and electromagnetic waves. Transitory computer readable media can provide the program to a computer via a wired communication line such as electric wires and optical fibers or a radio communication line.

**Reference Signs List**

| | |
|---|---|
| 1 | DISTANCE-MEASUREMENT APPARATUS |
| 2 | GENERATION UNIT |
| 4 | TRANSMISSION UNIT |
| 6 | RECEPTION UNIT |
| 8 | SPECIFICATION UNIT |
| 10 | DISTANCE CALCULATION UNIT |
| 100 | DISTANCE-MEASUREMENT APPARATUS |
| 102 | FREQUENCY OFFSET GENERATOR |
| 104 | MODULATION SIGNAL GENERATION UNIT |
| 106 | OPTICAL MODULATOR |
| 108 | LIGHT SOURCE |
| 110 | PULSE GENERATION UNIT |
| 120 | OPTICAL TRANSMISSION UNIT |
| 122 | OPTICAL RECEPTION UNIT |
| 130 | OPTICAL INTERFERENCE UNIT |
| 132 | OPTICAL/ELECTRICAL CONVERSION UNIT |
| 134 | AD CONVERTER |
| 140 | BANDPASS FILTER |
| 150 | TIMING EXTRACTION UNIT |
| 154 | TIME DIFFERENCE SPECIFICATION UNIT |
| 160 | DISTANCE CALCULATION UNIT |
| 200 | DISTANCE-MEASUREMENT APPARATUS |
| 202 | LIGHT SOURCE |
| 204 | TRANSMISSION PULSE GENERATION UNIT |
| 208 | MULTIPLEXER |
| 210 | PULSE GENERATION UNIT |
| 224 | LIGHT SOURCE |
| 300 | DISTANCE-MEASUREMENT APPARATUS |
| 302 | FREQUENCY OFFSET GENERATOR |
| 304 | MODULATION SIGNAL GENERATION UNIT |
| 310 | PULSE GENERATION UNIT |
| 340 | BANDPASS FILTER |
| 350 | TIMING EXTRACTION UNIT |
| 354 | TIME DIFFERENCE SPECIFICATION UNIT |
| 400 | DISTANCE-MEASUREMENT APPARATUS |
| 402 | FREQUENCY OFFSET GENERATOR |
| 404 | MODULATION SIGNAL GENERATION UNIT |
| 410 | PULSE GENERATION UNIT |
| 454 | TIME DIFFERENCE SPECIFICATION UNIT |

## Claims

1. A distance-measurement apparatus (1) comprising:

generation means (2) for generating a transmission pulse set composed of a plurality of transmission pulses of which a strength of an optical signal changes in a pulse-like manner, the generation means (2) being configured so that a time difference between times at which the plurality of transmission pulses are transmitted respectively differs according to a transmitting order of the transmission pulse set, the plurality of transmission pulses constituting the transmission pulse set having frequency offsets different from each other with respect to a reference frequency;
transmission means (4) for repeatedly transmitting the generated transmission pulse set;
reception means (6) for receiving reflected pulses of the transmission pulses reflected on a distance-measurement-target object;
specification means (8) for specifying a time difference between times at which the plurality of reflected pulses having frequency offsets different from each other are received respectively; and
distance calculation means (100) for calculating a distance to the distance-measurement-target object based on receiving timings of the received reflected pulses and transmitting timings of the transmission pulses corresponding to the time difference specified for the reflected pulses.

2. The distance-measurement apparatus (1) according to Claim 1, wherein

the generation means (2) is configured to generate the transmission pulse set composed of two transmission pulses, the transmission pulse set being configured so that a time difference between times at which the two transmission pulses are transmitted differs according to the transmitting order of the transmission pulse set, and
the specification means (8) is configured to specify a time difference between two reflected pulses corresponding to the two transmission pulses, respectively, constituting the transmission pulse set.

3. The distance-measurement apparatus (1) according to Claim 1 or 2, wherein

the reception means (6) is configured to receive an optical signal including the reflected pulse, and
the distance-measurement apparatus (1) further comprises:

detecting means for detecting a frequency offset of the received reflected pulse; and
separation means for separating the received optical signal for each of the frequency offsets of the reflected pulses detected by the detecting means.

4. The distance-measurement apparatus (1) according to any one of Claims 1 to 3, wherein the generation means (2) is configured to generate the plurality of transmission pulses having the frequency offsets different from each other by modulating an optical signal emitted from a light source into an optical signal having a different frequency for each of the transmission pulses, the light source being configured to emit an optical signal having the reference frequency.

5. The distance-measurement apparatus (1) according to Claim 1, wherein

the generation means (2) is configured to generate a transmission pulse set composed of at least three transmission pulses, the transmission pulse set being configured so that at least one of time differences between a time at which a first transmission pulse of the at least three transmission pulses is transmitted and times at which a plurality of second transmission pulses different from the first transmission pulse are transmitted respectively differs according to the transmitting order of the transmission pulse set, and
the specification means (8) is configured to specify a time difference between a time at which the reflected pulse corresponding to the first transmission pulse is received and times at which a plurality of reflected pulses corresponding to the plurality of second transmission pulses are received respectively.

6. A distance-measurement method comprising:

generating (S12) a transmission pulse set composed of a plurality of transmission pulses of which a strength of an optical signal changes in a pulse-like manner, in such a manner that a time difference between times at which the plurality of transmission pulses are transmitted respectively differs according to a transmitting order of the transmission pulse set, the plurality of transmission pulses constituting the transmission pulse set having frequency offsets different from each other with respect to a reference frequency;
repeatedly transmitting (S14) the generated transmission pulse set;

receiving (S16) reflected pulses of the transmission pulses reflected on a distance-measurement-target object;

specifying (S18) a time difference between times at which the plurality of reflected pulses having frequency offsets different from each other are received respectively; and

calculating (S20) a distance to the distance-measurement-target object based on receiving timings of the received reflected pulses and transmitting timings of the transmission pulses corresponding to the time difference specified for the reflected pulses.

7. The distance-measurement method according to Claim 6, wherein

the transmission pulse set composed of two transmission pulses is generated, the transmission pulse set being configured so that a time difference between times at which the two transmission pulses are transmitted differs according to the transmitting order of the transmission pulse set, and

a time difference between two reflected pulses corresponding to the two transmission pulses, respectively, constituting the transmission pulse set is specified.

8. The distance-measurement method according to Claim 6 or 7, wherein

an optical signal including the reflected pulse is received,

a frequency offset of the received reflected pulse is detected, and

the received optical signal is separated for each of the frequency offsets of the detected reflected pulses.

9. The distance-measurement method according to any one of Claims 6 to 8, wherein the plurality of transmission pulses having the frequency offsets different from each other are generated by modulating an optical signal emitted from a light source into an optical signal having a different frequency for each of the transmission pulses, the light source being configured to emit an optical signal having the reference frequency.

10. The distance-measurement method according to Claim 6, wherein

a transmission pulse set composed of at least three transmission pulses are generated, the transmission pulse set being configured so that at least one of time differences between a time at which a first transmission pulse of the at least three transmission pulses is transmitted and times at which a plurality of second transmission pulses different from the first transmission pulse are transmitted respectively differs according to the transmitting order of the transmission pulse set, and

a time difference between a time at which the reflected pulse corresponding to the first transmission pulse is received and times at which a plurality of reflected pulses corresponding to the plurality of second transmission pulses are received respectively is specified.

**Patentansprüche**

1. Entfernungsmessvorrichtung (1), die aufweist:

eine Erzeugungseinrichtung (2) zum Erzeugen eines Sendeimpulssatzes, der aus mehreren Sendeimpulsen zusammengesetzt ist, von denen sich eine Stärke eines optischen Signals in einer impulsartigen Weise ändert, wobei die Erzeugungseinrichtung (2) so konfiguriert ist, dass sich eine Zeitdifferenz zwischen Zeiten, zu denen die mehreren Sendeimpulse jeweils gesendet werden, gemäß einer Sendereihenfolge des Sendeimpulssatzes unterscheidet, wobei die mehreren Sendeimpulse, die den Sendeimpulssatz bilden, Frequenzversätze aufweisen, die sich voneinander in Bezug auf eine Referenzfrequenz unterscheiden;

eine Sendeeinrichtung (4) zum wiederholten Senden des erzeugten Sendeimpulssatzes;

eine Empfangseinrichtung (6) zum Empfangen von reflektierten Impulsen der Sendeimpulse, die an einem Entfernungsmessungs-Zielobjekt reflektiert werden;

eine Spezifizierungseinrichtung (8) zum Spezifizieren einer Zeitdifferenz zwischen Zeiten, zu denen die mehreren reflektierten Impulse mit voneinander verschiedenen Frequenzversätzen jeweils empfangen werden; und

eine Entfernungsberechnungseinrichtung (100) zum Berechnen einer Entfernung zum Entfernungsmessungs-Zielobjekt basierend auf Empfangszeitpunkten der empfangenen reflektierten Impulse und Sendezeitpunkten der Sendeimpulse entsprechend der für die reflektierten Impulse spezifizierten Zeitdifferenz.

2. Entfernungsmessvorrichtung (1) nach Anspruch 1, wobei

die Erzeugungseinrichtung (2) konfiguriert ist, den aus zwei Sendeimpulsen zusammengesetzten Sendeimpulssatz zu erzeugen, wobei der Sendeimpulssatz so konfiguriert ist, dass eine Zeitdifferenz zwischen den Zeiten, zu denen die beiden Sendeimpulse gesendet werden, sich entsprechend der Sendereihenfolge des Sendeimpulssatzes unterscheidet, und die Spezifizierungseinrichtung (8) konfiguriert ist, eine Zeitdifferenz zwischen zwei reflektierten Impulsen zu spezifizieren, die jeweils den beiden Sendeimpulsen entsprechen, die den Sendeimpulssatz bilden.

3. Entfernungsmessvorrichtung (1) nach Anspruch 1 oder 2, wobei

die Empfangseinrichtung (6) konfiguriert ist, ein optisches Signal zu empfangen, das den reflektierten Impuls enthält, und die Entfernungsmessvorrichtung (1) ferner aufweist:

eine Erfassungseinrichtung zum Erfassen eines Frequenzversatzes des empfangenen reflektierten Impulses; und eine Trenneinrichtung zum Trennen des empfangenen optischen Signals für jeden der Frequenzversätze der reflektierten Impulse, die von der Erfassungseinrichtung erfasst wurden.

4. Entfernungsmessvorrichtung (1) nach einem der Ansprüche 1 bis 3, wobei die Erzeugungseinrichtung (2) konfiguriert ist, die mehreren Sendeimpulse mit zueinander unterschiedlichen Frequenzversätzen zu erzeugen, indem sie ein von einer Lichtquelle emittiertes optisches Signal in ein optisches Signal mit einer unterschiedlichen Frequenz für jeden der Sendeimpulse moduliert, wobei die Lichtquelle konfiguriert ist, ein optisches Signal mit der Referenzfrequenz zu emittieren.

5. Entfernungsmessvorrichtung (1) nach Anspruch 1, wobei

die Erzeugungseinrichtung (2) konfiguriert ist, einen Sendeimpulssatz zu erzeugen, der aus mindestens drei Sendeimpulsen zusammengesetzt ist, wobei der Sendeimpulssatz so konfiguriert ist, dass sich mindestens eine der Zeitdifferenzen zwischen einer Zeit, zu der ein erster Sendeimpuls der mindestens drei Sendeimpulse gesendet wird, und Zeiten, zu denen mehrere zweite Sendeimpulse, die sich von dem ersten Sendeimpuls unterscheiden, gesendet werden, jeweils gemäß der Sendereihenfolge des Sendeimpulssatzes unterscheiden, und die Spezifizierungseinrichtung (8) konfiguriert ist, eine Zeitdifferenz zwischen einer Zeit, zu der der reflektierte Impuls, der dem ersten Sendeimpuls entspricht, empfangen wird, und Zeiten zu spezifizieren, zu denen mehrere reflektierte Impulse, die den mehreren zweiten Sendeimpulsen entsprechen, jeweils empfangen werden.

6. Entfernungsmessverfahren, das aufweist:

Erzeugen (S12) eines Sendeimpulssatzes, der aus mehreren Sendeimpulsen zusammengesetzt ist, von denen sich eine Stärke eines optischen Signals in einer impulsartigen Weise ändert, derart, dass sich eine Zeitdifferenz zwischen den Zeiten, zu denen die mehreren Sendeimpulse jeweils gesendet werden, gemäß einer Sendereihenfolge des Sendeimpulssatzes unterscheidet, wobei die mehreren Sendeimpulse, die den Sendeimpulssatz bilden, Frequenzversätze aufweisen, die sich voneinander in Bezug auf eine Referenzfrequenz unterscheiden; wiederholtes Senden (S14) des erzeugten Sendeimpulssatzes; Empfangen (S16) von reflektierten Impulsen der Sendeimpulse, die an einem Entfernungsmessungs-Zielobjekt reflektiert werden; Spezifizieren (S18) einer Zeitdifferenz zwischen Zeiten, zu denen die mehreren reflektierten Impulse mit zueinander unterschiedlichen Frequenzversätzen jeweils empfangen werden; und Berechnen (S20) einer Entfernung zu dem Entfernungsmessungs-Zielobjekt basierend auf Empfangszeitpunkten der empfangenen reflektierten Impulse und Sendezeitpunkten der Sendeimpulse, die der für die reflektierten Impulse spezifizierten Zeitdifferenz entsprechen.

7. Entfernungsmessverfahren nach Anspruch 6, wobei

der aus zwei Sendeimpulsen zusammengesetzte Sendeimpulssatz erzeugt wird, wobei der Sendeimpulssatz so konfiguriert ist, dass sich eine Zeitdifferenz zwischen den Zeiten, zu denen die zwei Sendeimpulse gesendet werden, entsprechend der Sendereihenfolge des Sendeimpulssatzes unterscheidet, und eine Zeitdifferenz zwischen zwei reflektierten Impulsen, die jeweils den zwei Sendeimpulsen entsprechen, die den Sendeimpulssatz bilden, festgelegt wird.

8. Entfernungsmessverfahren nach Anspruch 6 oder 7, wobei

ein optisches Signal, das den reflektierten Impuls enthält, empfangen wird, ein Frequenzversatz des empfangenen reflektierten Impulses erfasst wird, und

das empfangene optische Signal für jeden der Frequenzversätze der erfassten reflektierten Impulse getrennt wird.

9. Entfernungsmessverfahren nach einem der Ansprüche 6 bis 8, wobei die mehreren Sendeimpulse mit zueinander unterschiedlichen Frequenzversätzen erzeugt werden, indem ein von einer Lichtquelle emittiertes optisches Signal in ein optisches Signal mit einer unterschiedlichen Frequenz für jeden der Sendeimpulse moduliert wird, wobei die Lichtquelle so konfiguriert ist, dass sie ein optisches Signal mit der Referenzfrequenz emittiert.

10. Entfernungsmessverfahren nach Anspruch 6, wobei

ein Sendeimpulssatz, der aus mindestens drei Sendeimpulsen zusammengesetzt wird, erzeugt wird, wobei der Sendeimpulssatz so konfiguriert ist, dass sich mindestens eine der Zeitdifferenzen zwischen einer Zeit, zu der ein erster Sendeimpuls der mindestens drei Sendeimpulse gesendet wird, und Zeiten, zu denen mehrere zweite Sendeimpulse, die sich vom ersten Sendeimpuls unterscheiden, jeweils gemäß der Sendereihenfolge des Sendeimpulssatzes unterscheiden, und
eine Zeitdifferenz zwischen einer Zeit, zu der der reflektierte Impuls, der dem ersten Sendeimpuls entspricht, empfangen wird, und Zeiten spezifiziert wird, zu denen mehrere reflektierte Impulse, die den mehreren zweiten Sendeimpulsen entsprechen, jeweils empfangen werden.

**Revendications**

1. Dispositif de télémétrie (1), comprenant :

une unité de génération (2) destinée à générer un ensemble d'impulsions de transmission composé d'une pluralité d'impulsions de transmission dont l'intensité d'un signal optique varie en mode pulsé, ladite unité de génération (2) étant configurée de sorte que les différences temporelles respectives entre les moments où la pluralité d'impulsions de transmission est transmise diffèrent en fonction d'un ordre de transmission de l'ensemble d'impulsions de transmission, la pluralité d'impulsions de transmission constituant l'ensemble d'impulsions de transmission présentant des décalages de fréquence différents les uns des autres par rapport à une fréquence de référence ;
une unité de transmission (4) destinée à transmettre de manière répétée l'ensemble d'impulsions de transmission généré ;

une unité de réception (6) destinée à recevoir les impulsions réfléchies des impulsions de transmission sur un objet cible de télémétrie ;
une unité de spécification (8) destinée à spécifier une différence temporelle entre les moments où la pluralité d'impulsions réfléchies ayant des décalages de fréquence différents les uns des autres sont respectivement reçues ; et
une unité de calcul de distance (100) destinée à calculer une distance par rapport à l'objet cible de télémétrie sur la base des moments de réception des impulsions réfléchies reçues et des moments d'émission des impulsions de transmission correspondant à la différence temporelle spécifiée pour les impulsions réfléchies.

2. Dispositif de télémétrie (1) selon la revendication 1, où

l'unité de génération (2) est configurée pour générer l'ensemble d'impulsions de transmission composé de deux impulsions de transmission, ledit ensemble d'impulsions de transmission étant configuré de sorte qu'une différence temporelle entre les moments où les deux impulsions de transmission sont transmises diffère en fonction de l'ordre de transmission de l'ensemble d'impulsions de transmission, et où
l'unité de spécification (8) est configuré pour spécifier une différence temporelle entre deux impulsions réfléchies correspondant aux deux impulsions de transmission respectives, constituant l'ensemble d'impulsions de transmission.

3. Dispositif de télémétrie (1) selon la revendication 1 ou la revendication 2, où

l'unité de réception (6) est configurée pour recevoir un signal optique comprenant l'impulsion réfléchie, et
le dispositif de télémétrie (1) comprend en outre :

une unité de détection destinée à détecter un décalage de fréquence de l'impulsion réfléchie reçue ; et
une unité de séparation destinée à séparer le signal optique reçu pour chacun des décalages de fréquence des impulsions réfléchies détectées par l'unité de détection.

4. Dispositif de télémétrie (1) selon l'une des revendications 1 à 3, où l'unité de génération (2) est configurée pour générer la pluralité d'impulsions de transmission ayant des décalages de fréquence différents les uns des autres par modulation d'un signal optique émis par une source lumineuse en un signal optique ayant une fréquence différente pour chacune des impulsions de transmission, la source lumineuse étant configurée pour émettre un signal optique avec la fréquence de référence.

5. Dispositif de télémétrie (1) selon la revendication 1, où

l'unité de génération (2) est configurée pour générer un ensemble d'impulsions de transmission composé d'au moins trois impulsions de transmission, l'ensemble d'impulsions de transmission étant prévu de sorte qu'au moins une des différences temporelles entre un moment où une première impulsion de transmission des au moins trois impulsions de transmission est transmise et les moments où une pluralité de deuxièmes impulsions de transmission, différentes de la première impulsion de transmission, sont respectivement transmises, diffère en fonction de l'ordre de transmission de l'ensemble d'impulsions de transmission, et

l'unité de spécification (8) est configurée pour spécifier une différence temporelle entre un moment où l'impulsion réfléchie correspondant à la première impulsion de transmission est reçue et les moments où une pluralité d'impulsions réfléchies correspondant à la pluralité de deuxièmes impulsions de transmission sont respectivement reçues.

6. Procédé de télémétrie, comprenant :

la génération (S12) d'un ensemble d'impulsions de transmission composé d'une pluralité d'impulsions de transmission dont l'intensité d'un signal optique varie en mode pulsé, de sorte que les différences temporelles respectives entre les moments où la pluralité d'impulsions de transmission est transmise diffèrent en fonction d'un ordre de transmission de l'ensemble d'impulsions de transmission, la pluralité d'impulsions de transmission constituant l'ensemble d'impulsions de transmission présentant des décalages de fréquence différents les uns des autres par rapport à une fréquence de référence ;

la transmission répétée (S14) de l'ensemble d'impulsions de transmission généré ;

la réception (S 16) des impulsions réfléchies des impulsions de transmission réfléchies sur un objet cible de télémétrie ;

la spécification (S18) d'une différence temporelle entre les moments où la pluralité d'impulsions réfléchies ayant des décalages de fréquence différents les uns des autres sont respectivement reçues ; et

le calcul (S20) d'une distance par rapport à l'objet cible de télémétrie sur la base des moments de réception des impulsions réfléchies reçues et des moments d'émission des impulsions de transmission correspondant à la différence temporelle spécifiée pour les impulsions réfléchies.

7. Procédé de télémétrie selon la revendication 6, où

l'ensemble d'impulsions de transmission composé de deux impulsions de transmission est généré, l'ensemble d'impulsions de transmission étant configuré de sorte qu'une différence temporelle entre les moments où les deux impulsions de transmission sont transmises diffère en fonction de l'ordre de transmission de l'ensemble d'impulsions de transmission, et

un écart temporel entre deux impulsions réfléchies correspondant respectivement aux deux impulsions de transmission constituant l'ensemble d'impulsions de transmission est spécifié.

8. Procédé de télémétrie selon la revendication 6 ou la revendication 7, où

un signal optique comprenant l'impulsion réfléchie est reçu,

un décalage de fréquence de l'impulsion réfléchie reçue est détecté, et

le signal optique reçu est séparé pour chacun des décalages de fréquence des impulsions réfléchies détectées.

9. Procédé de télémétrie selon l'une des revendications 6 à 8, où la pluralité d'impulsions de transmission ayant des décalages de fréquence différents les uns des autres sont générées par modulation d'un signal optique émis par une source lumineuse en un signal optique ayant une fréquence différente pour chacune des impulsions de transmission, la source lumineuse étant configurée pour émettre un signal optique avec la fréquence de référence.

10. Procédé de télémétrie selon la revendication 6, où

un ensemble d'impulsions de transmission composé d'au moins trois impulsions de transmission est généré, ledit ensemble d'impulsions de transmission étant prévu de sorte qu'au moins une des différences temporelles entre un moment où une première impulsion de transmission des au moins trois impulsions de transmission est transmise et les moments où une pluralité de deuxièmes impulsions de transmission, différentes de la première impulsion de transmission, sont respectivement transmises, diffère en fonction de l'ordre de transmission de l'ensemble d'impulsions de transmission, et

une différence temporelle entre un moment où l'impulsion réfléchie correspondant à la première impulsion de transmission est reçue et les

**EP 3 869 231 B1**

moments où une pluralité d'impulsions réfléchies correspondant à la pluralité de deuxièmes impulsions de transmission sont respectivement reçues est spécifiée.

Fig. 1

S12 GENERATE PLURALITY OF TRANSMISSION PULSE
SET HAVING TIME DIFFERENCES THAT DIFFER
ACCORDING TO ORDER OF TRANSMISSION

S14 TRANSMIT TRANSMISSION PULSE SET

S16 RECEIVE REFLECTED PULSE

S18 SPECIFY TIME DIFFERENCE
BETWEEN REFLECTED PULSES

S20 MEASURE DISTANCE TO
DISTANCE-MEASUREMENT-TARGET OBJECT

Fig. 2

Fig. 3

Fig. 4

Fig. 5

S102 — GENERATE TWO TRANSMISSION PULSE SET HAVING TIME DIFFERENCES THAT DIFFER ACCORDING TO ORDER OF TRANSMISSION

S104 — TRANSMIT TRANSMISSION PULSE SET

S106 — RECEIVE REFLECTED PULSE

S108 — DETECT FREQUENCY OFFSET OF REFLECTED PULSE

S110 — SEPARATE SIGNAL ACCORDING TO FREQUENCY OFFSET

S112 — EXTRACT RECEIVING TIMING FOR EACH REFLECTED PULSE

S114 — SPECIFY TIME DIFFERENCE BETWEEN REFLECTED PULSES

S116 — OUTPUT MEASUREMENT STOP TRIGGER

S118 — MEASURE DISTANCE TO DISTANCE-MEASUREMENT-TARGET OBJECT

Fig. 6

Fig. 7

Fig. 8

Fig. 9

Fig. 10

Fig. 11

Fig. 12

Fig. 13

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014522979 A
- WO 2018116412 A1
- WO 2017134707 A1